# EUROPÄISCHE PATENTSCHRIFT

(11) **EP 3 328 545 B1**
(45) Veröffentlichungstag und Bekanntmachung des Hinweises auf die Patenterteilung: **15.01.2020**
(21) Anmeldenummer: 16750658.3
(22) Anmeldetag: 26.07.2016
(51) Int. Cl.: B01L 3/02

(54) **PIPETTIERVORRICHTUNG ZUR PIPETTIERUNG KLEINER FLÜSSIGKEITSVOLUMINA**
PIPETTING DEVICE FOR PIPETTING SMALL VOLUMES OF LIQUIDS
DISPOSITIF DE PIPETAGE SERVANT AU PIPETAGE DE PETITES QUANTITÉS DE LIQUIDE

(30) Priorität: 30.07.2015 DE 102015214566
(43) Veröffentlichungstag der Anmeldung: 06.06.2018
(60) Teilanmeldung: 19211204.3
(73) Patentinhaber: Hamilton Bonaduz AG, 7402 Bonaduz (CH)
(72) Erfinder: ROMER, Hanspeter, 8340 Hinwil (CH); GYSEL, Fridolin, 8134 Adliswil (CH); LENDENMANN, Urs, 7000 Chur (CH)
(74) Vertreter: Ruttensperger Lachnit Trossin Gomoll
(86) Internationale Anmeldenummer: PCT/EP2016/067747
(87) Internationale Veröffentlichungsnummer: WO 2017/017084

(56) Entgegenhaltungen:
- EP-A1- 2 656 917
- DE-A1-102010 064 049
- US-A1- 2006 071 973

## Beschreibung

Die vorliegende Erfindung betrifft eine Pipettiervorrichtung zum Pipettieren von Dosierflüssigkeiten gemäß dem Oberbegriff von Anspruch 1. Die Erfindung betrifft außerdem ein Pipettierverfahren gemäß dem Oberbegriff von Anspruch 19.

Der Oberbegriff des Anspruchs 1 ist bekannt aus der EP 2 656 917 A1. Die US 2006/071973 A1 offenbart einen Tropfen-Dispenser mit einem durch ein äußeres Magnetfeld beweglichen Ferrofluid-Kolben. Die US 2006/0071973 A1 gibt an, Tropfen mit einer Größe von 50 bis 500 nl dispensieren zu können. Die Pipettierkanäle dieser bekannten Pipettiervorrichtung sind nach Entleerung durch Aspiration von Dosierflüssigkeit wieder füllbar. Der aus der US 2006/0071973 A1 Ferrofluid-Kolben mit einem Durchmesser von 0,5 mm kann seinen gesamten Hub von 3 mm in etwa 50 ms zurücklegen. Das vom Ferrofluid-Kolben bei der Dispensation eines Flüssigkeitstropfens in Dispensationsrichtung überstrichene Volumen beträgt bei einem angegebenen Hub von 0,3 µm und einem Kolbendurchmesser von 0,5 mm etwa 0,059 nl. Das offenbarte Verhältnis von überstrichenem Volumen zu dispensiertem Volumen ist also 0,00012 für einen Tropfen von 50 nl und ist 0,000012 für einen Tropfen von 500 nl.

Pipettiervorrichtungen sind im Stand der Technik hinreichend bekannt. Üblicherweise umfasst der Bewegungsantrieb einen rotierenden Elektromotor mit einem Spindeltrieb oder einem anderen Getriebe, mittels dem der Kolben durch den Elektromotor unter mechanischer Bewegungsvermittlung längs der Kanalbahn zur Bewegung antreibbar ist. Nachteilig an diesen mechanischen Bewegungsübertragungen zwischen Elektromotor und dem Kolben sind die großen bewegten Massen, nie restlos ausschließbare Bewegungsspiele, die Verwindbarkeit und Verformbarkeit von Getriebebauteilen und die damit verbundene limitierte Bewegungsgenauigkeit und Bewegungsdynamik.

Während das Aspirieren einer exakten Menge an Dosierflüssigkeit, also das Einsaugen der gewünschten Dosierflüssigkeitsmenge in einen Pipettierraum, etwa einer Pipettierspitze, der Pipettiervorrichtung, in der Regel wenig problematisch ist, da das Aspirieren durch ein Abheben der Pipettierspitze aus einem Vorrat an Dosierflüssigkeit bei stillstehendem Kolben nach Aufnahme der gewünschten Dosierflüssigkeitsmenge stets unterbrochen werden kann, kommt es beim volumengenauen Dispensieren einer Dosierflüssigkeit auf das Ablösen der gewünschten Dosierflüssigkeitsmenge von der Pipettieröffnung an. Beim Dispensieren spielen daher Einflussgrößen, wie die Viskosität der Dosierflüssigkeit, ihre Dichte und ihre Oberflächenspannung, eine wichtige Rolle.

Große Mengen an Dosierflüssigkeit, also Mengen von mehr als 5 µl, werden in der Regel in einem synchronen Betriebsmodus der Pipettiervorrichtung pipettiert, in welchem die Dosierflüssigkeit in der Pipettierspitze, genauer ihr zum Kolben hinweisender Meniskus, der dosierseitigen Endfläche des Kolbens synchron folgt. Dies bedeutet, dass sich der Meniskus dann, wenn der Kolben in einer Dispensationsrichtung als einer Pipettierrichtung bewegt wird, gemeinsam mit der dosierseitigen Endfläche des Kolbens zur Pipettieröffnung der Pipettiervorrichtung hin bewegt, und sich dann, wenn der Kolben in einer Aspirationsrichtung als einer Pipettierrichtung bewegt wird, gemeinsam mit der dosierseitigen Endfläche des Kolbens von der Pipettieröffnung der Pipettiervorrichtung wegbewegt. Es kann zu einem geringfügigen zeitlichen Versatz zwischen der Bewegung der dosierseitigen Endfläche des Kolbens und dem Meniskus der Dosierflüssigkeit kommen, da das zwischen dem Kolben und der Dosierflüssigkeit vorhandene Arbeitsgas zunächst erst durch die Kolbenbewegung auf ein Druckniveau gebracht werden muss, auf welchem der gewünschte Pipettiervorgang ablaufen kann. Dies ist beim Aspirieren ein Unterdruck gegenüber dem Umgebungsdruck, sodass Dosierflüssigkeit getrieben durch den Differenzdruck zwischen dem Druck des Arbeitsgases und dem Umgebungsdruck von einem Dosierflüssigkeitsvorrat, in welchen die Pipettieröffnung der Pipettierspitze eingetaucht ist, in die Pipettierspitze einströmt. Dies ist beim Dispensieren ein Überdruck gegenüber dem Umgebungsdruck, sodass in der Pipettierspitze aufgenommene Dosierflüssigkeit getrieben vom Differenzdruck zwischen dem Druck des Arbeitsgases und dem Umgebungsdruck durch die Pipettieröffnung der Pipettierspitze austritt. Das kompressible Arbeitsgas wirkt somit wie eine Gasfeder. Aufgrund des geringen, aber vorhandenen zeitlichen Versatzes zwischen der Kolbenbewegung und der Bewegung des Meniskus der Dosierflüssigkeit in der Pipettierspitze wird das herkömmliche Pipettieren von Dosierflüssigkeit nachfolgend als quasi-synchroner Betriebsmodus bezeichnet.

Beim herkömmlichen Dispensieren bei quasi-synchroner Bewegung von Kolben und Dosierflüssigkeit, wird der Abriss der zu dispensieren Dosierflüssigkeit von der Pipettierspitze unter Ausnutzung von Trägheitskräften bewirkt. Der Kolben wird eine vorbestimmte Zeit in Dispensationsrichtung bewegt und dann, wenn ein Abriss von aus der Pipettierspitze hinaus verdrängter Dosierflüssigkeit gewünscht ist, möglichst schlagartig angehalten. Die Massenträgheit der bereits verdrängten Dosierflüssigkeit, die sich aufgrund der vergangenen Kolbenbewegung noch in der Dispensationsbewegung befindet, führt dann zum Abschnüren der Dosierflüssigkeit an der Pipettieröffnung und schließlich zum Abriss derselben. Der Zusammenhang zwischen Kolbenbewegung und unter Vermittlung des Arbeitsgases verdrängter Dosierflüssigkeit wird üblicherweise empirisch für verschiedene Flüssigkeitsklassen ermittelt und ist in einem Datenspeicher der Pipettiervorrichtung gespeichert. Bei diesem quasi-synchronen Betriebsmodus übersteigt das von der dosierseitigen Kolbenfläche während der Bewegung des Kolbens in Pipettierrichtung überstrichene Volumen (Pipettiervolumen) das tatsächlich pipettierte Volumen der Dosierflüssigkeit in der Regel um nicht mehr als 5 %. Das Verhältnis von Pipettiervolumen zu tatsächlich pipettiertem Dosierflüssigkeitsvolumen ist folglich in der Regel nicht größer als 1,05.

Durch den trägheitsinduzierten Flüssigkeitsabriss an der Pipettieröffnung bleibt mitunter Dosierflüssigkeit unerwünschterweise außen an der Pipettierspitze im Bereich der Pipettieröffnung haften. Um zu vermeiden, dass diese anhaftende Flüssigkeitsmenge ganz oder teilweise unkontrolliert abtropft, wird der Kolben nach dem Flüssigkeitsabriss ein kleines Stück in Aspirationsrichtung bewegt, um die außen anhaftende Dosierflüssigkeit durch die Pipettieröffnung zurück in die Pipettierspitze zu saugen.

Diese Dispensation von Dosierflüssigkeit unter Ausnutzung von Trägheitskräften funktioniert abhängig von der jeweiligen Dosierflüssigkeit nicht mehr sicher für Einzel-Dosiervolumina von weniger als 3 bis 5 µl, da dann aufgrund der geringen Masse die erzielbaren Trägheitskräfte andere Krafteinflüsse, insbesondere aus der Oberflächenspannung, nicht mehr ausreichend sicher überwinden können, um ein sicheres, wiederholbares Ablösen derart kleiner Dosierflüssigkeitsmengen gewährleisten zu können.

Von den zuvor genannten Pipettiervorrichtungen zu unterscheiden sind die sogenannten "Dispensierer" oder "Dispenser", die in der Regel Dosierflüssigkeiten ausschließlich dispensieren, jedoch nicht aspirieren können. Dispenser erhalten die zu dispensierende Dosierflüssigkeit in der Regel über Zuführkanäle aus einem Vorrat, welcher mit einem durch den Kolben veränderlichen Dosierraum des Dispensers in Strömungsverbindung steht.

Von den zuvor genannten Pipettiervorrichtungen weiter zu unterscheiden sind Pipettiervorrichtungen, bei welchen die dosierseitige Endfläche des Kolbens unmittelbar in Kontakt mit der zu pipettieren Dosierflüssigkeit steht. Es befindet sich dann zwischen dem Kolben und der Dosierflüssigkeit kein Arbeitsgas.

Wegen der unmittelbaren Bewegungskopplung von Kolben und Dosierflüssigkeit in derartigen Pipettiervorrichtungen bezeichnet man deren Pipettierart in der Fachwelt mit dem englischen Begriff "Positive Displacement". Das Weglassen von kompressiblem im Arbeitsgas erhöht zwar die theoretische erzielbare Pipettiergenauigkeit, führt jedoch in der Praxis zu Schwierigkeiten an anderer Stelle. Zum einen lässt sich ein Gaseinschluss im Pipettiervolumen beim Aspirieren nicht vollkommen sicher ausschließen, sodass auch beim Positive-Displacement-Pipettieren Gas- bzw. Luftblasen in der aspirierten Dosierflüssigkeit auftreten können, was sich nachteilig auf die erreichbare Pipettiergenauigkeit auswirkt. Zum anderen ist die beim Positive-Displacement-Pipettieren erzielbare Pipettiergenauigkeit dann, wenn die Dosierflüssigkeit zur Schaumbildung neigt, äußerst gering. Außerdem muss wegen der Benetzung des Pipettierkolbens durch die Dosierflüssigkeit dann, wenn die zu pipettierende Dosierflüssigkeit gewechselt werden soll, nicht nur eine Pipettierspitze, sondern mit dieser auch der Pipettierkolben gewechselt werden, was einen erheblichen Montageaufwand und daraus folgend erhebliche Kosten bedeutet.

Im Gegensatz dazu wird die Pipettierart von gattungsgemäßen Pipettiervorrichtungen mit einem Arbeitsgas zwischen dem Kolben und der Dosierflüssigkeit in der Fachwelt als "Air Displacement" bezeichnet, wenngleich das Arbeitsgas nicht notwendigerweise Luft sein muss, sondern auch ein Inertgas oder ein quasi-inertes Gas, wie etwa Stickstoff, sein kann. Bei dieser Pipettierart ist der Pipettierkolben von der Dosierflüssigkeit durch eine Gas-, insbesondere durch eine Luftsäule dauerhaft und vollständig getrennt.

Zu unterscheiden ist die vorliegende erfindungsgemäße Pipettiervorrichtung auch von solchen, die eine Säule einer Systemflüssigkeit als Kolben verwenden. Von derartigen Systemflüssigkeiten geht ein gewisses Maß an Kontaminationsrisiko aus, da bisweilen nicht ausgeschlossen werden kann, dass Systemflüssigkeit, also ein Teil eines gleichsam flüssigen Kolbens, in die zu pipettierende Dosierflüssigkeit gelangt. Der Kolben der Pipettiervorrichtung der vorliegenden Erfindung ist wenigstens abschnittsweise, zur Vermeidung eines Kontaminationsrisikos bevorzugt vollständig als Festkörper ausgebildet. Bei nur abschnittsweiser Ausbildung als Festkörper ist wenigstens die zur Dosierflüssigkeit hinweisende dosierseitige Endfläche des Kolbens als Festkörper ausgebildet, um eine Übertragung von Flüssigkeit zu Flüssigkeit zu verhindern.

Aus der WO 2011/083125 A1 ist eine Pipettiervorrichtung mit linearmotorisch angetriebenem Kolben bekannt. Diese kommt ohne Bewegung vermittelndes Getriebe zwischen dem Stator des Linearmotors und dem Kolben aus.

Ebenso ist aus der JP 2012-167968 A eine Pipettiervorrichtung mit linearmotorisch angetriebenem Kolben bekannt.

Aus der US 2001/0016358 A ist eine anhand der in der Schnittdarstellung erkennbaren Kolbenform sowie aufgrund der Angaben, dass der Kolben vor dem Aspirieren an das untere Ende der Pipette bewegt wird und dass bei einer Änderung der Dosierflüssigkeit die Pipette und der Kolben getauscht werden müssen, eindeutig nach dem Prinzip des "Positive Displacement" arbeitende Pipettiervorrichtung bekannt, bei welcher ein Tropfen an Dosierflüssigkeit im Jet-Modus aus der Pipettierspitze herausgeschleudert werden kann, indem der Kolben durch den ihn antreibenden linearen Schrittmotor unter Bewegungsvermittlung eines Gestänges schlagartig um einige 10 µm in Dispensationsrichtung bewegt wird. Die schlagartige Kolbenbewegung kann alternativ durch einen Piezo-Aktuator bewirkt werden.

Durch die schlagartige geringfügige Kolbenbewegung von nur wenigen 10 µm in Dispensationsrichtung schlägt der Kolben auf die in der Pipettiervorrichtung aufgenommene Dosierflüssigkeit und schleudert so einen Tropfen der Dosierflüssigkeit durch die Pipettieröffnung hinaus in Richtung eines Dosierzieles. Die ausgestoßene Tropfenmenge hängt gemäß den Angaben in der US 2001/0016358 A von der Größe der Pipettieröffnung, dem vom Kolben zurückgelegten Bewegungsweg und der für die Bewegung benötigten Zeitdauer ab. Mit dem in der US 2001/0016358 A beschriebenen Verfahren des Dispensierens sind angeblich Tropfen von etwa 100 nl erzielbar. Kleinere Tropfen werden durch eine der eigentlichen Pipettieröffnung vorgeschobene Lochblende mit geringerer Öffnung als die Pipettieröffnung erreicht.

Bei dem in der US 2001/0016358 A beschriebenen Jet-Modus handelt es sich um eine Dispensationsart, bei welcher die dispensierte Flüssigkeitsmenge das Dosierziel im ballistischen Flug oder Fall erreicht, d. h. die dispensierte Flüssigkeitsmenge verlässt die Pipettieröffnung vollständig, bevor sie das Dosierziel erreicht und legt eine Strecke im Flug bzw. Fall zurück.

Das oben zu den gattungsgemäßen Pipettiervorrichtungen Ausgeführte trifft ebenso auf das gattungsgemäße Pipettierverfahren zu.

Es ist Aufgabe der vorliegenden Erfindung, eine technische Lehre bereitzustellen, welche es den nach dem Prinzip des "Air Displacement" arbeitenden gattungsgemäßen Pipettiervorrichtungen ermöglicht, vorbestimmte Einzel-Dosiervolumina von weniger als 5 µl wiederholgenau bei möglichst geringem Kontaminationsrisiko zu pipettieren, ohne dass der Kolben während des Pipettiervorgangs in Berührung mit der Dosierflüssigkeit gelangt.

Diese Aufgabe wird erfindungsgemäß gelöst durch eine gattungsgemäße Pipettiervorrichtung, welche zusätzlich alle Merkmale des kennzeichnenden Teils des Anspruchs 1 aufweist. Der Kolben dieser Pipettiervorrichtung ist peitschenartig bewegbar.

Diese peitschenartige Bewegbarkeit des Kolbens der erfindungsgemäßen Pipettiervorrichtung kommt in unterschiedlichen konkreten Ausprägungen der Kolbenbewegung beim Pipettieren zum Ausdruck:
Gemäß der vorliegenden Erfindung wird die peitschenartige Bewegbarkeit des Kolbens dadurch realisiert, dass die Steuereinrichtung dazu ausgebildet ist, zur Pipettierung eines vorbestimmten Einzel-Dosiervolumens von weniger als 5 µl den Bewegungsantrieb derart zu betreiben, dass der Kolben in Pipettierrichtung bewegt wird und dabei seine dosierseitige Endfläche ein Pipettiervolumen überstreicht, welches um nicht weniger als das 1,4-fache größer als das Einzel-Dosiervolumen ist, und dass der Kolben anschließend in einer der Pipettierrichtung entgegengesetzten Gegenpipettierrichtung bewegt wird und dabei seine dosierseitige Endfläche ein Gegenpipettiervolumen überstreicht, wobei zwischen dem Beginn des Steuersignals der Steuereinrichtung zum Antrieb des Kolbens in Pipettierrichtung und dem Ende des Steuersignals zum Antrieb des Kolbens in Gegenpipettierrichtung nicht mehr als 50 ms, vorzugsweise nicht mehr als 30 ms verstreichen.

Dieser Aspekt stellt auf das die Kolbenbewegung steuernde Steuersignal ab, dem der Kolben aufgrund von Massenträgheit, Reibung und dergleichen äußeren Einflüssen in der Regel mit zeitlichem Versatz und mit einer gewissen Abweichung der Kolben-Istbewegung von der durch das Steuersignal vorgegebenen Soll-Bewegung folgt. Die Ansteuerung eines der Soll-Bewegung ausreichend genau folgenden Kolbens führt bereits zu dem nachfolgend ausführlich beschriebenen erfindungsgemäßen Erfolg und realisiert die mit der vorliegenden Erfindung angestrebten Wirkungen.

Abgestellt auf die tatsächliche Kolbenbewegung wird eine peitschenartige Bewegung des Kolbens dadurch realisiert, dass die Steuereinrichtung dazu ausgebildet ist, zur Pipettierung eines vorbestimmten Einzel-Dosiervolumens von weniger als 5 µl den Bewegungsantrieb derart zu betreiben, dass der Kolben ausgehend von einer Startstellung in Pipettierrichtung bewegt wird und dabei seine dosierseitige Endfläche ein Pipettiervolumen überstreicht, welches um nicht weniger als das 1,4-fache größer als das Einzel-Dosiervolumen ist, und dass der Kolben anschließend ausgehend von einem Bewegungsrichtungs-Umkehrort in einer der Pipettierrichtung entgegengesetzten Gegenpipettierrichtung bewegt wird und dabei seine dosierseitige Endfläche ein Gegenpipettiervolumen überstreicht, wobei zwischen den Zeitpunkten, in welchen der Kolben in Pipettierrichtung und in Gegenpipettierrichtung jeweils den Ort erreicht, welcher dem halben Weg zwischen Kolben-Startstellung und Kolben-Umkehrort entspricht, nicht mehr als 50 ms, vorzugsweise nicht mehr als 30 ms verstreichen.

Der erste und der zweite Aspekt können auch gemeinsam in Kombination an einer Pipettiervorrichtung realisiert sein.

Die Heranziehung der Zeit, die der Kolben benötigt, um ausgehend vom Ort der "Halbwegsweite", also vom Mittelpunkt der Strecke zwischen Kolben-Startstellung und dem Totpunkt mit Bewegungsrichtungsumkehr von der Pipettierrichtung in die Gegenpipettierrichtung (Bewegungsrichtungs-Umkehrort), zum Totpunkt und zurück zum Ort der Halbwegsweite zu gelangen, sorgt für eine Ausblendung von für den Pipettiervorgang irrelevanten Abweichungen der Kolben-Istbewegung von der Kolben-Sollbewegung, die etwa gegen Ende der Kolbenbewegung bei der Rückkehr in eine Stillstandsposition in Form von Überschwingen auftreten können. Das etwaig auftretende Überschwingen kann die Feststellung des tatsächlichen Kolbenstillstands am Ende eines Pipettiervorgangs erschweren. Da das Überschwingen jedoch gemäß den bisher durchgeführten Versuchen keinerlei Einfluss auf die Menge an pipettierter Dosierflüssigkeit hat, kann eine vertiefte Diskussion des Bewegungsverhaltens des Kolbens am Bewegungsende unterbleiben. Entscheidend für den durch die peitschenartige Kolbenbewegung erzielten Pipettiererfolg ist eben die oben genannte Zeitspanne, die der Kolben benötigt, um während seiner Bewegung in Pipettierrichtung ausgehend von dem Ort der Halbwegsweite zum Totpunkt seiner Bewegung und anschließend während seiner Bewegung in Gegenpipettierrichtung wieder den Ort der Halbwegsweite zu erreichen.

Die Bewegung des Kolbens kann anhand eines beliebigen Bezugspunktes am Kolben erfasst werden, etwa anhand der dosierseitigen Kolbenfläche.

Die Wirkung des erfindungsgemäß vorgeschlagenen Bewegungsablaufs des Kolbens auf die Dosierflüssigkeit ist noch nicht vollständig geklärt. Ein Erklärungsmodell geht jedoch davon aus, dass mit der Bewegung des Kolbens in Pipettierrichtung um mehr als das zu pipettierende vorbestimmte Einzel-Dosiervolumen die Anregungs- oder Losbrech-Energie auf die zu pipettierende Dosierflüssigkeit übertragen wird, die notwendig ist, um gegen Trägheitskräfte, Oberflächenspannung, Adhäsion und Kohäsion der Dosierflüssigkeit deren Bewegung in die gewünschte Pipettierrichtung einzuleiten.

Mit der Bewegung des Kolbens in die der Pipettierrichtung entgegengesetzten Gegenpipettierrichtung, bei welcher der Kolben wiederum in der Regel ein anderes, vorzugsweise größeres Volumen als das eigentlich zu pipettierende Einzel-Dosiervolumen überstreicht, wird die zuvor angeregte Pipettierbewegung der Dosierflüssigkeit wieder "entregt".

Es wird somit ein sehr kurzer, scharfer Druckimpuls vom Kolben über das Arbeitsgas auf die Dosierflüssigkeit übertragen.

Überraschenderweise können die vom Kolben bei seiner Bewegung überstrichenen Volumina: Pipettiervolumen und Gegenpipettiervolumen, gleich groß sein. Der Kolben kann sich daher am Ende des Pipettiervorgangs wieder in der Startstellung befinden. Trotzdem wird ein Einzel-Dosiervolumen pipettiert.

Es kommt gemäß der vorliegenden Erfindung daher nicht auf ein "Verlagerungssaldo" des Kolbens an. Versuche haben vielmehr gezeigt, dass das tatsächlich pipettierte Dosierflüssigkeitsvolumen von der nach der Zeit integrierten Kolben-Sollbewegung abhängt. Die Kolben-Sollbewegung kann etwa in Form von Soll-Orten des Kolbens längs der Kanalbahn zu jeweiligen Soll-Zeitpunkten, also durch Soll-Ort-Zeit-Kurven, angegeben werden. Da die Kolben-Sollbewegung vom Steuersignal der Steuereinrichtung abhängt, kann das tatsächlich pipettierte Dosierflüssigkeitsvolumen von dem nach der Zeit integrierten zeitabhängigen Verlauf des Steuersignals abhängen. Ebenso kann das tatsächlich pipettierte Dosierflüssigkeitsvolumen von der nach der Zeit integrierten Kolben-Istbewegung abhängen. Wiederum kann die Kolben-Istbewegung in Form von Ist-Orten des Kolbens längs der Kanalbahn zu jeweiligen Ist-Zeitpunkten, also in Form von Ist-Ort-Zeit-Kurven, angegeben werden. Die Integrationsgrenzen bei Verwendung der Kolben-Istbewegung sind die beiden Durchgänge des Kolbens durch den Ort der Halbwegsweite.

Trägt man also eine der genannten zeitlich sich ändernden Größen: Kolben-Sollbewegung, Steuersignal, Kolben-Istbewegung, als Graph nach der Zeit auf, ist die zwischen Bewegungsbeginn und Bewegungsende unter dem Graphen liegende Fläche ein Maß für das tatsächlich pipettierte Dosierflüssigkeitsvolumen. Bei Heranziehung der Kolben-Istbewegung als Bewertungsgröße für das pipettierte Dosierflüssigkeitsvolumen ist der relevante Bewegungsbeginn der erste Durchgang durch den Ort der Halbwegsweite und ist das relevante Bewegungsende der zweite Durchgang durch diesen Ort.

Das vom Kolben, bzw. von seiner dosierseitigen Endfläche, überstrichene Volumen ist dabei unter der Voraussetzung, dass sich die Gestalt der Endfläche während des Pipettierens nicht ändert, der Flächeninhalt der Projektion der dosierseitigen Endfläche auf eine zur Kanalbahn orthogonale Projektionsebene multipliziert mit dem Kolbenhub. Da wenigstens die dosierseitige Endfläche des Kolbens als Festkörper ausgebildet ist, ist diese Annahme realistisch.

Mit "Pipettierrichtung" ist dabei beim Aspirieren eine Bewegungsrichtung des Kolbens bezeichnet, welche ein Einsaugen von Dosierflüssigkeit in einen Pipettierraum der Pipettiervorrichtung, etwa in einer Pipettierspitze, bewirkt. Beim Dispensieren ist damit eine Bewegungsrichtung des Kolbens bezeichnet, welche ein Ausschieben von Dosierflüssigkeit aus einem Pipettierraum der Pipettiervorrichtung, etwa wiederum aus einer Pipettierspitze, bewirkt. Die "Gegenpipettierrichtung" ist dann die der jeweiligen Pipettierrichtung entgegengesetzte Bewegungsrichtung des Kolbens.

Ein Einzel-Dosiervolumen ist im Sinne der vorliegenden Anmeldung immer dann vorbestimmt, wenn der Pipettiervorgang mit dem Ziel ein konkretes bekanntes Dosiervolumen zu pipettieren, abläuft. Das Einzel-Dosiervolumen kann durch manuelle Eingabe an der Pipettiervorrichtung oder durch Datenübertragung an die Pipettiervorrichtung oder durch Berechnung aus manuell eingegebenen oder/und aus in einer Speichervorrichtung hinterlegten Daten für die Pipettiervorrichtung vorbestimmt sein.

Das von der dosierseitigen Endfläche des Kolbens zunächst überstrichene Pipettiervolumen kann nicht nur von dem vorbestimmten Einzel-Dosiervolumen, sondern zusätzlich von Parametern der jeweils zu pipettierenden Dosierflüssigkeit oder/und von dem Volumen des Arbeitsgases zwischen dosierseitiger Kolbenfläche und Dosierflüssigkeit abhängen. Grundsätzlich gilt: je größer die Viskosität der Dosierflüssigkeit (gemessen bei Raumtemperatur von 20 °C bei einem Atmosphärendruck von 1013,25 hPa mittels eines Rotationsviskosimeters), desto größer ist das Verhältnis von Pipettiervolumen zu Einzeldosiervolumen. Ebenso gilt: je größer das Volumen des Arbeitsgases ist, desto größer ist das Verhältnis von Pipettiervolumen zu Einzeldosiervolumen. Bei den bevorzugten wechselbaren Pipettierspitzen kann üblicherweise ein bauartbedingtes Arbeitsgasvolumen zwischen Kolben und Dosiervolumen von 180 µl nicht unterschritten und von 3000 µl nicht überschritten werden.

So kann beispielsweise das Pipettiervolumen nicht weniger als das 1,5-fache des Einzeldosiervolumens betragen. Es kann jedoch auch deutlich größer als das Einzel-Dosiervolumen sein. So kann es beispielsweise das Fünffache des Einzel-Dosiervolumens betragen, wenn eine niedrige Anregungsenergie ausreicht, die Dosierflüssigkeit zum Fließen durch die in der Regel enge Pipettieröffnung zu beschleunigen. Weniger gut zur Bewegung anregbare Dosierflüssigkeiten können mit einer Kolbenbewegung in Pipettierrichtung und einem dabei von der dosierseitigen Endfläche überstrichenen Pipettiervolumen von nicht weniger als dem Zehnfachen des Einzel-Dosiervolumens zur Bewegung angeregt werden. Da die Kolbenbewegung bevorzugt mit hoher Volumengeschwindigkeit als dem pro Zeiteinheit von der dosierseitigen Endfläche überstrichenen Volumen ausgeführt wird, steigt mit zunehmendem Pipettiervolumen die Wiederholgenauigkeit der Pipettierung sehr kleiner Einzel-Dosiervolumina von weniger als 5 µl. Daher kann das Pipettiervolumen bevorzugt nicht weniger als das Fünfundzwanzigfache des Einzel-Dosiervolumens betragen.

Versuche haben gezeigt, dass besonders für die häufig zu pipettierende Klasse von wässrigen Flüssigkeiten - das sind im Sinne der vorliegenden Anmeldung Flüssigkeiten mit einer Viskosität im Bereich von 0,8 bis 10 mPas, gemessen bei Raumtemperatur von 20 °C bei einem Atmosphärendruck von 1013,25 hPa mittels eines Rotationsviskosimeters - ein Pipettiervolumen von zwischen dem Zehnfachen und dem Sechzigfachen, bevorzugt von zwischen dem Zehnfachen und dem Fünfundzwanzigfachen, des Einzel-Dosiervolumens zu hervorragenden Dosierergebnissen führt. Ein Pipettiervolumen von zwischen dem Zehnfachen und dem Fünfundzwanzigfachen des Einzel-Dosiervolumens liefert auch für Dosierflüssigkeiten außerhalb des oben genannten Viskositätsbereichs hervorragende Dosierergebnisse.

Eine Obergrenze des Pipettiervolumens stellt ein Pipettiervolumen dar, bei welchem aufgrund der großen Zeitdauer die der Kolben benötigt, um mit seiner dosierseitigen Endfläche das Pipettiervolumen zu überstreichen, mehr als das Einzel-Dosiervolumens durch die Pipettieröffnung hindurch bewegt. Tests haben gezeigt, dass Pipettiervolumina mit mehr als dem 100-fachen kein sinnvolles Pipettieren mehr von Dosiervolumina mit weniger als 5 µl gestatten.

Es sei an dieser Stelle klargestellt, dass die erfindungsgemäß ausgebildete Pipettiervorrichtung trotz der zuvor beschriebenen großen Kolbenbewegung nur das vorbestimmte Einzel-Dosiervolumens an Dosierflüssigkeit durch ihre Pipettieröffnung hindurch bewegt, beim Dispensieren ebenso wie beim Aspirieren. Es findet keine Überdosierung bzw. Überpipettierung mit anschließender Korrektur in Gegenrichtung statt. Dosierflüssigkeit wird während eines Pipettiervorgangs erfindungsgemäß nur in die gewünschte Pipettierrichtung bewegt. Ein Pipettiervorgang im Sinne der vorliegenden Anmeldung ist abgeschlossen, wenn die Kolbenbewegung in Gegenpipettierrichtung endet.

Das Gegenpipettiervolumen kann gleich dem Pipettiervolumen sein, sogar beim Aliquotieren. Allerdings kann sich dann mit zunehmender Anzahl von Dispensationsvorgängen im Aliquotierbetrieb eine Gassäule zwischen dem pipettieröffnungsnäheren Meniskus der in einem Pipettierraum der Pipettiervorrichtung aufgenommenen Dosierflüssigkeit und der Pipettieröffnung bilden, was die Genauigkeit weiterer Dispensationsvorgänge beeinträchtigen kann.

Daher kann das Gegenpipettiervolumen um das Einzel-Dosiervolumen kleiner sein als das Pipettiervolumen. Somit kann sichergestellt werden, dass der pipettieröffnungsnähere Meniskus der aufgenommenen Dosierflüssigkeit trotz durchgeführter Dispensationsvorgänge in einem möglichst konstanten Ort verbleibt, bevorzugt möglichst nahe an der Pipettieröffnung selbst. Auch das Gegenpipettiervolumen kann somit gemäß der zuvor gemachten Angaben wesentlich größer als das Einzel-Dosiervolumen sein.

Es kann jedoch auch zunächst der Kolben in Gegenpipettierrichtung in seine Kolben-Startstellung zu Beginn des Pipettiervorgangs zurückverstellt werden und dann wieder in Pipettierrichtung um das Einzel-Dosiervolumen nachgeführt werden. Die Nachführbewegung kann dann erheblich langsamer ablaufen als die Kolbenbewegung während des Pipettiervorgangs und zählt nicht mehr zum Pipettiervorgang.

Das für einen Pipettiervorgang kleiner Dosierflüssigkeitsmengen korrekte Pipettier- und Gegenpipettiervolumen kann bei vorgegebenem Einzel-Dosiervolumen einfach durch Versuche ermittelt werden.

Somit wird gemäß vorliegender Erfindung im Gegensatz zu dem zuvor im Zusammenhang mit dem Stand der Technik beschriebenen quasi-synchronen Pipettierbetrieb ein asynchroner Pipettierbetrieb genutzt, bei welchem ein signifikanter Abschnitt der Kolbenbewegung nicht mit der Bewegung der Dosierflüssigkeit korreliert. Während es bei dem zuvor beschriebenen quasi-synchronen Pipettierbetrieb lediglich einen zeitlichen Versatz zwischen gleichsinnigen Bewegungen von Kolben und Dosierflüssigkeit gibt, können bei dem vorliegend beschriebenen asynchronen Pipettierbetrieb in ein und demselben Zeitpunkt bzw. in ein und derselben Zeitspanne zueinander entgegengesetzt gerichtete Bewegungen von Kolben und Dosierflüssigkeit auftreten oder es kann eine Bewegung von Dosierflüssigkeit durch die Pipettieröffnung erst einsetzen, nachdem der Kolben seine Bewegung in Gegenpipettierrichtung abgeschlossen hat und wieder zum Stillstand gekommen ist.

Statt wie bisher durch verhältnismäßig langsame Kolbenbewegungen Dosierflüssigkeit einzusaugen oder/und abzugeben, wird bei der vorliegenden Pipettiervorrichtung durch die schnelle Kolbenbewegung ein Druckimpuls im kompressiblen Arbeitsgas erzeugt, der auf die inkompressible Dosierflüssigkeit übertragen wird und dort zur Absonderung kleiner Einzel-Dosiervolumina aus einer größeren Dosierflüssigkeitsmenge führen kann. Aufgrund der Kolbenbewegung in Pipettierrichtung und in Gegenpipettierrichtung umfasst der genannte Druckimpuls verglichen mit der umgebenden Atmosphäre eine steigende Flanke und eine fallende Flanke. Bei der Aspiration geht üblicherweise die fallende Pulsflanke zeitlich der steigenden Pulsflanke voraus, während es bei der Dispensation genau umgekehrt ist. Bei der Aspiration wird ein Unterdruckimpuls erzeugt, bei der Dispensation ein Überdruckimpuls.

Unabhängig davon, wann bei einem Dispensationsvorgang das Einzel-Dosiervolumen an Dosierflüssigkeit sich durch die Pipettieröffnung hindurchzubewegen beginn, ist jedoch den meisten Dispensationsvorgängen gemein, dass bei der Dispensation der Kolben zur Bewegungsrichtungsumkehr angesteuert wird und in der Regel die Bewegungsrichtung des Kolbens tatsächlich umgekehrt wird, bevor sich das vorbestimmte Flüssigkeitsvolumen von der Pipettieröffnung abgelöst hat. Dadurch kann eine Dispensation eines vorbestimmten Einzel-Dosiervolumens von weniger als 5 µl im Jet-Modus realisiert werden.

Gemäß einer vorteilhaften Ausführungsform, die zur Dispensation von Einzel-Dosiervolumina von weniger als 5 µl im Jet-Modus ausgebildet ist, kann die die Steuereinrichtung dazu ausgebildet sein, den Bewegungsantrieb zur Bewegungsrichtungsumkehr des Kolbens von der Dispensationsrichtung in die Aspirationsrichtung anzusteuern, bevor sich das vorbestimmte Flüssigkeitsvolumen von der Pipettieröffnung abgelöst hat. Es wird dann das vorbestimmte Flüssigkeitsvolumen aus der Pipettieröffnung herausgeschleudert. Auch dies ist Ausdruck der peitschenartigen Kolbenbewegung.

Entsprechendes gilt für den Aspirationsbetrieb, bei welchem jedoch ein Jet-Modus nicht auftreten kann. Folglich kann die Steuereinrichtung zusätzlich oder alternativ dazu ausgebildet sein, zur Aspiration von vorbestimmten Einzel-Dosiervolumina von weniger als 5 µl den Bewegungsantrieb derart zu betreiben, dass der Kolben in Aspirationsrichtung bewegt wird und, bevor das vorbestimmte Einzel-Dosiervolumen vollständig aspiriert ist, den Bewegungsantrieb zu einer Richtungsumkehr des Kolbens anzusteuern, so dass der Kolben in Dispensationsrichtung bewegt wird.

Bei ausreichend schneller Kolbenbewegung kann es sogar vorkommen, dass die Kolbenbewegung in Pipettier- und Gegenpipettierrichtung vollständig abgeschlossen ist, bevor sich das gewünschte Einzel-Dosiervolumen an Dosierflüssigkeit vollständig durch die Pipettieröffnung hindurchbewegt hat. Die Kolbengeschwindigkeit kann daher ebenfalls eine wichtige Einflussgröße sein.

Gemäß einem weiteren Gesichtspunkt der vorliegenden Erfindung wird folglich die peitschenartige Bewegbarkeit des Kolbens bei einer gattungsgemäßen Pipettiervorrichtung dadurch bewirkt, dass der Bewegungsantrieb einen Linearmotor umfasst und dass die Steuereinrichtung und der Bewegungsantrieb zur Pipettierung eines vorbestimmten Einzel-Dosiervolumens von weniger als 5 µl dazu ausgebildet sind, den Kolben mit einer Spitzengeschwindigkeit von wenigstens 5000 µl/s, bevorzugt von wenigstens 10000 µl/s, und von nicht mehr als 25000 µl/s zu bewegen.

Gemäß dem nun eingeführten Gesichtspunkt stellt die Bewegungsgeschwindigkeit des Kolbens ebenfalls eine Ausprägung der peitschenartigen Kolbenbewegung dar. Dabei ist die Volumengeschwindigkeit des Kolbens, also das von der dosierseitigen Endfläche des Kolbens pro Zeiteinheit überstrichene Volumen, von größerer Bedeutung als die lineare Bewegungsgeschwindigkeit des Kolbens oder einer Kolbenstange. Zwar reicht bei Kolben mit größerer Kolbenfläche ein geringerer Hub aus, um das gleiche Volumen zu überstreichen, für das ein Kolben mit geringerer Kolbenfläche einen größeren Hub benötigt. Somit könnte zur Realisierung zunehmender Volumengeschwindigkeiten einfach ein Kolben mit größerer Kolbenfläche längs der Kanalbahn bewegt werden als ein Kolben mit kleinerer Kolbenfläche. Allerdings steigt die für eine Bewegungseinleitung des Kolbens notwendige Losbrech-Kraft, etwa zur Überwindung der Haftreibung, mit der Kolbengröße erheblich an, sodass Kolben mit zunehmend großer Kolbenfläche für die Pipettierung von Einzel-Dosiervolumina von weniger als 5 µl zunehmend schlechter steuerbar sind.

Die vorliegende Erfindung betrifft bevorzugt Pipettiervorrichtungen, deren Kolben eine Kolbenfläche von zwischen 3 und 80 mm² aufweisen, also welche bei kreisförmiger Kolbenfläche einen Durchmesser von zwischen 2 und etwa 10 mm aufweisen. Um mehrere Pipettierkanäle in einem zeilen- und spaltenförmigen Raster mit möglichst geringer Rasterweite anordnen zu können, betrifft die vorliegende Erfindung besonders bevorzugt Pipettiervorrichtungen, deren Kolben eine Kolbenfläche von zwischen 3 und 20 mm² aufweisen, was bei kreisförmiger Kolbenfläche einem Durchmesser von zwischen 2 und etwa 5 mm entspricht.

Bei zu hohen maximalen Kolbengeschwindigkeiten von beispielsweise mehr als 25000 µl/s kommt es zwar immer noch zu einer Flüssigkeitsbewegung in einen Pipettierraum oder aus diesem hinaus, jedoch wird dann das Einzel-Dosiervolumen in der Regel in mehrere Teilvolumina zersprengt oder zerstäubt abgegeben oder/und aufgenommen, was für hochgenaues Pipettieren der hier diskutierten kleinen Einzel-Dosiervolumina von weniger als 5 µl inakzeptabel ist. Grundsätzlich kann festgestellt werden, dass mit zunehmender Kolbengeschwindigkeit die Neigung steigt, die vorbestimmte Dosierflüssigkeitsmenge unerwünschterweise in mehreren Teilmengen zu pipettieren. Nach derzeitigem Kenntnisstand werden zumindest für wässrige Dosierflüssigkeiten, wie sie oben definiert sind, bei maximalen Kolbengeschwindigkeiten von etwa 10.000 µl/s hinsichtlich Genauigkeit und Wiederholbarkeit der pipettierten Flüssigkeitsmenge ganz hervorragende Ergebnisse erzielt.

Um einen Eindruck von der Kolbengeschwindigkeit zu geben: Bevorzugt benötigt der Kolben für seine Bewegung in Pipettierrichtung und in Gegenpipettierrichtung von dem Ort der Halbwegsweite bis zum erneuten Erreichen dieser Halbwegsweite weniger als 30 ms, vorzugsweise weniger als 20 ms, höchst bevorzugt sogar weniger als 16 ms. Es sind sogar Bewegungszeiten im einstelligen Millisekundenbereich denkbar. Entsprechendes gilt für die Dauer des Steuersignals vom Beginn des den Kolben in Pipettierrichtung antreibenden Steuersignals bis zum Ende des den Kolben in Gegenpipettierrichtung antreibenden Steuersignals. Für das Steuersignal sind Signaldauern von bis zu 1 ms möglich, um besonders kleine Einzel-Dosiervolumina zu pipettieren.

Eine vollständige Kolbenbewegung in Pipettier- und Gegenpipettierrichtung, mit welcher ein Einzel-Dosiervolumen von 1 µl einer wässrigen Dosierflüssigkeit bei einem von der dosierseitigen Endfläche überstrichenen Pipettiervolumen von 30 µl und einem überstrichenen Gegenpipettiervolumen von 29 µl kann mit einem Kolben mit kreisförmiger Kolbenfläche und einem Durchmesser von 4,3 mm problemlos in etwa 15 ms ablaufen.

Der kinematische Aspekt der peitschenartigen Kolbenbewegung beruht jedoch nicht nur auf der erzielbaren maximalen Kolbengeschwindigkeit, sondern auch auf der Zeitspanne, die der Bewegungsantrieb benötigt, den Kolben auf die gewünschte Kolbengeschwindigkeit zu beschleunigen oder/und ausgehend von der gewünschten Kolbengeschwindigkeit abzubremsen. Bevorzugt sind daher die Steuereinrichtung und der Bewegungsantrieb dazu ausgebildet, den Kolben mit einer Beschleunigung von wenigstens 2 x 10⁶ µl/s², bevorzugt von wenigstens 6 x 10⁶ µl/s² besonders bevorzugt sogar von wenigstens 8 x 10⁶ µl/s² und von nicht mehr als 5 x 10⁷ µl/s² zur Bewegung längs der Kanalbahn zu beschleunigen oder/und zu verzögern. Es gelten die oben gemachten Angaben zur bevorzugten Kolbengröße, angegeben als Kolbenfläche.

Völlig überraschend hat sich weiter gezeigt, dass das Pipettieren von Dosierflüssigkeiten, insbesondere von wässrigen Dosierflüssigkeiten, mit den hier vorgeschlagenen erfindungsgemäßen Pipettiervorrichtungen unabhängig von der jeweils verwendeten Pipettierspitze ist. Mit gleichen Pipettierparametern wird für ein und dieselbe Dosierflüssigkeit an ein und derselben Pipettiervorrichtung mit unterschiedlichen Pipettierspitzen stets das gleiche Pipettierergebnis wiederholbar erzielt. Insbesondere ist das Pipettierergebnis unabhängig von dem Nenn-Pipettierraumvolumen der jeweils an die Pipettiervorrichtung angekoppelten Pipettierspitze.

Wenn in der vorliegenden Anmeldung von einem Pipettierraum der Pipettiervorrichtung die Rede ist, so ist dabei bevorzugt an den Pipettierraum einer auswechselbaren Pipettierspitze gedacht, wenngleich der Pipettierraum auch integral mit dem Pipettierkanal ausgebildet sein kann.

Aufgrund der ungeheuren Vorteile allein für die Hygiene der Dosierflüssigkeit und des Pipettiervorgangs ist somit die Pipettiervorrichtung bevorzugt zur lösbaren Aufnahme von Pipettierspitzen ausgebildet. Da die hier vorgestellten Pipettiervorrichtungen, die mit der erfindungsgemäßen peitschenartigen Kolbenbewegung arbeiten, ein von der Pipettierspitze unabhängiges Pipettierergebnis auch und gerade für kleine Einzel-Dosiervolumina von weniger als 5 µl erzielen, können mit der erfindungsgemäßen Pipettiervorrichtung Pipettierspitzen verwendet werden, deren Nenn-Pipettierraumvolumina wesentlich größer sind als das vorbestimmte Einzel-Dosiervolumen. Die lösbar an die Pipettiervorrichtung ankoppelbaren Pipettierspitzen können ein Nenn-Pipettierraumvolumen aufweisen, welches wenigstens das Zehnfache, vorzugsweise wenigstens das Zwanzigfache, besonders bevorzugt wenigstens das Fünfzigfache, höchstbevorzugt wenigstens das Hundertfache des Einzel-Dosiervolumens beträgt.

Derart große Pipettierspitzen, beispielsweise von bis zu 300 µl Nenn-Pipettierraumvolumen, aus denen wiederholbar nicht nur Einzel-Dosiervolumina von weniger als 5 µl sondern auch von weniger als 1 µl bis hinab zu etwa 50 nl dispensiert werden können, erlauben einen vorteilhaften Aliquotierbetrieb der erfindungsgemäßen Pipettiervorrichtung. Somit kann einmal eine große Menge Dosierflüssigkeit aspiriert und über eine Vielzahl von Dispensationsvorgängen auch in sehr kleinen Dosen ohne zwischenzeitlich erneutes Aspirieren abgegeben werden.

Wie oben bereits geschildert wurde, ist mit der erfindungsgemäßen Pipettiervorrichtung ein sehr schneller Aliquotierbetrieb möglich, bei welchem eine Mehrzahl von Dispensationsvorgängen ausgeführt werden, bei denen jeweils das Pipettiervolumen und das Gegenpipettiervolumen gleich groß sind. Eine Anzahl von vorzugsweise 5 bis 8 solcher Dispensationsvorgängen hat sich als praktikabel erwiesen, bevor sich der pipettieröffnungsnähere Meniskus der im Pipettierraum aufgenommenen Dosierflüssigkeit soweit von der Pipettieröffnung entfernt hat, dass sich diese Entfernung negativ auf die Dispensationsgenauigkeit auswirkt.

Für ein möglichst genaues Aliquotieren mit nahezu beliebig vielen unmittelbar aufeinanderfolgenden Dispensationsvorgängen kann die Pipettiervorrichtung im Aliquotierbetrieb dazu ausgebildet sein, eine Mehrzahl von Dispensationsvorgängen auszuführen, bei welchen jeweils das Gegenpipettiervolumen um das Einzel-Dosiervolumen kleiner ist als das Pipettiervolumen. Dann bleibt die Lage des pipettieröffnungsnäheren Meniskus während des Aliquotierens im Wesentlichen unverändert.

Zur gezielten Veränderung des jeweils zu pipettierenden Einzel-Dosiervolumens kann gemäß einer vorteilhaften Weiterbildung der vorliegenden Erfindung vorgesehen sein, dass der Kolbenhub in Pipettierrichtung oder/und der Kolbenhub in Gegenpipettierrichtung oder/und die Kolbengeschwindigkeit oder/und die Kolbenbeschleunigung veränderbar ist. Üblicherweise werden die genannten Parameter für einen oder mehrere Pipettiervorgänge eingestellt. Sie können zwischen zwei Pipettiervorgängen geändert werden, wenn für einen nachfolgenden Pipettiervorgang ein anderes Einzel-Dosiervolumen gewünscht ist. Zur Einstellung wenigstens eines der genannten Parameter kann die Pipettiervorrichtung eine Eingabevorrichtung, etwa eine Tastatur oder/und einen Touchscreen oder/und eine Maus und dergleichen aufweisen.

Ein weiterer Vorteil der hier vorgestellten Pipettiervorrichtung liegt darin, dass mit ihr nicht nur die oben betonten Einzel-Dosiervolumen von weniger als 5 µl wiederholgenau pipettiert werden können, sondern dass die Pipettiervorrichtung grundsätzlich auch im zuvor beschriebenen quasi-synchronen Pipettierbetrieb betrieben werden kann, welcher ein genaues Pipettieren von Einzel-Dosiervolumina von mehr als 5 µl ermöglicht. Daher kann die Steuereinrichtung dazu ausgebildet sein, den Kolben zur Pipettierung eines vorbestimmten Einzel-Dosiervolumens von mehr als 5 µl mit einer Spitzengeschwindigkeit von nicht mehr als 1000 µl/s zu bewegen. Bei der angegebenen maximalen Geschwindigkeit des Kolbens von nicht mehr als 1000 µl/s folgt die Dosierflüssigkeit - gegebenenfalls mit geringem zeitlichen Versatz - in gleichgerichteter Bewegung dem Kolben. Das vom Kolben überstrichene Pipettiervolumen entspricht im Wesentlichen dem tatsächlich pipettierten Dosierflüssigkeitsvolumen. Wiederum gelten bevorzugt die oben genannten Kolbengrößen, angegeben durch die Kolbenfläche.

Mit der Möglichkeit, die erfindungsgemäße Pipettiervorrichtung sowohl im synchronen bzw. quasi-synchronen wie auch im asynchronen Pipettierbetrieb zu betreiben, kann ein und dieselbe erfindungsgemäße Pipettiervorrichtung dazu ausgebildet sein, ein auswählbares Einzel-Dosiervolumen in einem Dosiervolumenbereich von 100 nl bis 100 µl, vorzugsweise von 100 nl bis 1000 µl mit einer Volumenabweichung von nicht mehr als 2 % bezogen auf das vorbestimmte Einzel-Dosiervolumen als Nenn-Volumen reproduzierbar zu pipettieren. Somit ist die erfindungsgemäße Pipettiervorrichtung in der Lage, als maximales Pipettiervolumen das 10000-fache des minimalen Pipettiervolumens zu pipettieren. Dabei soll selbstverständlich nicht ausgeschlossen sein, dass beispielsweise die genannte Untergrenze von 100 nl noch unterschritten werden kann. Für die genannten Pipettiervolumen-Bereiche ist die Funktionalität der Pipettiervorrichtung jedenfalls gewährleistet.

Bevorzugt umfasst der Bewegungsantrieb einen Linearmotor. Die Verwendung des Linearmotors kann eine ausreichende Bewegungsdynamik, also eine ausreichend hohe erzielbare Beschleunigung des Kolbens und eine ausreichend hohe erzielbare Bewegungsgeschwindigkeit des Kolbens, gewährleistet werden.

Grundsätzlich kann der Linearantrieb als der Bewegungsantrieb des Kolbens einen Läufer aufweisen, welcher über ein Gestänge oder/und Getriebe mit dem Kolben zur gemeinsamen Bewegung verbunden ist. Allerdings erhöht dies unerwünschterweise die gemeinsam mit dem Kolben zu bewegenden Massen und die zu überwindende Reibung. Zur Bereitstellung einer möglichst hohen Bewegungsdynamik ist es daher bevorzugt, dass der Kolben selbst der Läufer des Linearmotors ist, so dass das elektromagnetische Feld des Linearmotor-Stators unmittelbar mit dem Kolben zu dessen Beschleunigung und Verzögerung wechselwirkt.

Die oben angegebenen Bewegungszeiten für eine vollständige Kolbenbewegung in Pipettierrichtung und in Gegenpipettierrichtung können vorteilhafterweise noch verkürzt werden, wenn der Kolben selbst als Läufer des Linearmotors verwendet wird. Dann kann die vollständige Kolbenbewegung in Pipettier- und Gegenpipettierbewegung eines Pipettiervorgangs in weniger als 15 ms, vorzugsweise in weniger als 12 ms ablaufen.

Um den Kolben selbst als Läufer möglichst genau im Pipettierkanal positionieren und möglichst definiert beschleunigen und bewegen zu können, ist es vorteilhaft, wenn der Kolben eine Mehrzahl von Permanentmagneten aufweist, welche längs der Kanalbahn aufeinander folgend mit Polarisierungsrichtung längs der Kanalbahn und mit längs der Kanalbahn unmittelbar einander gegenüberliegenden gleichnamigen Polen vorgesehen sind. Derartig angeordnete Permanentmagnete bilden gerade an den Stellen, an denen sich gleichnamige Pole gegenüberliegen, ein sehr präzises Magnetfeld aus, welches nicht nur die exakte Positionsermittlung durch Hall-Sensoren, sondern auch die effektive Kopplung des kolbenseitigen Magnetfelds mit dem veränderlichen, insbesondere beweglichen statorseitigen Magnetfeld ermöglicht.

Zur Erhöhung der Arbeitsleistung der Pipettiervorrichtung kann vorgesehen sein, dass sie eine Mehrzahl von parallelen Pipettierkanälen aufweist. Diese sind, wie zuvor bereits angedeutet wurde, bevorzugt an den Knotenpunkten eines gleichmäßigen orthogonalen Zeilen-Spalten-Rasters angeordnet. Die Verwendung von Linearmotoren zum Antrieb der Kolben ermöglicht dabei nicht nur die oben ausführlich beschriebene hohe Bewegungsdynamik, sondern auch die räumlich dichte Anordnung der Mehrzahl von Pipettierkanälen. Der Abstand eines Pipettierkanals von einem nächstgelegenen parallelen Pipettierkanal ist vorzugsweise nicht größer als 12 mm, besonders bevorzugt nicht größer als 10 mm. Der Abstand ist dabei gleich dem Rastermaß.

Die Pipettiervorrichtung kann zur Steigerung der Pipettiergenauigkeit zur Regelung der Kolbenbewegung ausgebildet sein. Bevorzugt wird die Kolbenbewegung abhängig vom Druck des Arbeitsgases geregelt. Hierzu kann der Pipettierkanal mit einem Drucksensor versehen sein, welcher zur Erfassung des Drucks des Arbeitsgases zwischen der dosierseitigen Endfläche des Kolbens und der zu pipettierenden Dosierflüssigkeit angeordnet und ausgebildet sein. Vorzugsweise ist der Drucksensor datenübertragungsmäßig mit der Steuereinrichtung verbunden, sodass die Steuereinrichtung die Kolbenbewegung in Abhängigkeit von den Erfassungssignalen des Drucksensors regeln kann. Der Drucksensor ist bevorzugt zur Druckerfassung im Mikrosekundenbereich, bevorzugt im Submikrosekundenbereich ausgebildet, um eine exakte Regelung sogar der oben beschriebenen peitschenartigen Kolbenbewegung zu ermöglichen.

Gemäß einem weiteren Aspekt der vorliegenden Erfindung wird die eingangs genannte technische Aufgabe auch gelöst durch ein gattungsgemäßes Verfahren, welches zusätzlich die Merkmale des kennzeichnenden Teils des Anspruchs 19 aufweisen.

Vorzugsweise verstreichen zwischen den genannten Grenzen nicht mehr als 20 ms, besonders bevorzugt nicht mehr als 15 ms.

Zur Erläuterung des erfindungsgemäßen Verfahrens wird auf die obige Beschreibung der zur Ausführung dieses Verfahrens ausgebildeten Pipettiervorrichtung verwiesen. Weiter wird darauf verwiesen, dass die oben beschriebenen Ausbildungen der erfindungsgemäßen Pipettiervorrichtung auch als Offenbarung von Vorgangsabläufen im Sinne einer Weiterbildung des oben beschriebenen erfindungsgemäßen Verfahrens und umgekehrt zu verstehen sind.

Um die bevorzugte peitschenartige Kolbenbewegung zu erreichen, folgt die Ansteuerung der Bewegung des Kolbens in der Gegenpipettierrichtung unmittelbar auf die Ansteuerung der Bewegung des Kolbens in Pipettierrichtung, ohne dass der Kolben zwischen diesen Bewegungen eine bewegungslose Ruhephase durchläuft - mit Ausnahme eines unvermeidlichen Stillstands am Totpunkt der Bewegungsumkehr mit dem ebenfalls unvermeidlichen erneuten Überwinden der Haftreibung.

Gemäß einem weiteren Aspekt der vorliegenden Erfindung kann die peitschenartige Kolbenbewegung dadurch realisiert sein, dass während des Pipettiervorgangs der Kolben in eine der Bewegung der Dosierflüssigkeit durch eine Pipettieröffnung hindurch entgegengesetzte Richtung bewegt wird. Bevorzugt findet diese entgegengesetzt gerichtete Bewegung von Kolben einerseits und Dosierflüssigkeit durch die Pipettieröffnung andererseits nach der Bewegungsumkehr des Kolbens statt. Es wird wiederum auf die obigen Ausführungen zur entsprechend ausgebildeten Pipettiervorrichtung verwiesen.

Erneut wird darauf hingewiesen, dass die entgegengesetzt gerichtete Bewegung von Kolben und Dosierflüssigkeit nicht notwendigerweise auftreten muss. Bei ausreichend hohen Kolbengeschwindigkeiten und Kolbenbeschleunigungen kann es sogar sein, dass die Kolbenbewegung in Gegenpipettierrichtung beendet ist, bevor die Dosierflüssigkeit beginnt, sich durch die Pipettieröffnung hindurch zu bewegen.

Unabhängig davon, ob sich Dosierflüssigkeit während der Bewegung des Kolbens in Pipettierrichtung durch die Pipettieröffnung hindurch bewegt hat, kann beim Dispensieren die Richtungsumkehr des Kolbens von der Dispensationsrichtung in die Aspirationsrichtung erfolgen, bevor das vorbestimmte Einzel-Dosiervolumen von der Pipttieröffnung abgerissen ist bzw. die Pipettieröffnung vollständig verlassen hat.

Entsprechendes gilt, wie oben bereits ausgeführt wurde, auch für das Aspirieren: beim Aspirieren kann die Richtungsumkehr des Kolbens von der Aspirationsrichtung in die Dispensationsrichtung erfolgen, bevor das vorbestimmte Einzel-Dosiervolumen vollständig durch die Pipttieröffnung hindurch geströmt ist.

Ein weiterer Aspekt der peitschenartigen Kolbenbewegung liegt - wie ebenfalls oben bereits ausführlich dargelegt wurde - in der maximalen Geschwindigkeit des Kolbens während seiner Bewegung längs der Kanalbahn. Zur Erzielung einer peitschenartigen Kolbenbewegung kann der Kolben in vorteilhafter Weise in Pipettierrichtung oder/und in Gegenpipettierrichtung mit einer maximalen Geschwindigkeit von wenigstens 5000 µl/s, bevorzugt von wenigstens 10000 µl/s, und von nicht mehr als 25000 µl/s bewegt werden. Es gelten die oben beschriebenen bevorzugten Kolbengrößen, angegeben durch die Kolbenfläche.

Ebenso liegt ein Aspekt der peitschenartigen Kolbenbewegung in der Beschleunigung oder/und in der Verzögerung, mit welcher der Kolben auf eine gewünschte Kolbengeschwindigkeit gebracht oder von einer Kolbengeschwindigkeit ausgehend abgebremst wird. Gemäß einer bevorzugten Ausführungsform des vorliegenden Verfahrens wird der Kolben in Pipettierrichtung oder/und in Gegenpipettierrichtung mit einer Beschleunigung von wenigstens 2 x 10⁶ µl/s², bevorzugt von wenigstens 6 x 10⁶ µl/s² besonders bevorzugt sogar von wenigstens 8 x 10⁶ µl/s zur Bewegung längs der Kanalbahn beschleunigt oder/und verzögert. Bei Beschleunigungen von über 5 x 10⁷ µl/s² droht ebenso wie bei Kolbengeschwindigkeiten von mehr als 25000 µl/s ein unerwünschtes Zerstäuben der zu pipettierenden Flüssigkeitsmenge.

Bevorzugt wird das erfindungsgemäße Pipettierverfahren im Aliquotierbetrieb derart ausgeführt, dass auf ein Aspirieren von Dosierflüssigkeit eine Mehrzahl von Dispensationsvorgängen mit jeweils einem dispensierten Einzel-Dosiervolumen von weniger als 5 µl ohne zwischenzeitliches weiteres Aspirieren folgt. Vorzugsweise folgen auf ein Aspirieren 10 bis 3000 Dispensationsvorgänge bevor erneut Dosierflüssigkeit aspiriert wird. 3000 Dispensationsvorgänge ohne zwischenzeitliches Aspirieren werden möglich, da das vorliegend beschriebene Verfahren die wiederholgenaue Dispensation eines Einzel-Dosiervolumens von 100 nl aus einer vollständig gefüllten Pipettierspitze mit einem Nenn-Pipettierraumvolumen von 300 µl gestattet.

Bevorzugt wird der Kolben beim Pipettieren, insbesondere beim Aliquotieren, in Gegenpipettierrichtung zurück in die Kolben-Startstellung bewegt oder in eine gegenüber der Kolben-Startstellung in Pipettierrichtung verlagerte Endstellung bewegt, wobei die Verlagerung multipliziert mit der jeweiligen dosierseitigen Kolbenfläche dem pipettierten Einzel-Dosiervolumen entspricht.

Allen zuvor geschilderten Aspekten der peitschenartigen Kolbenbewegung gemein ist, dass etwa beim Dispensieren die Bewegung des Kolbens in Gegenpipettierrichtung, also in Aspirationsrichtung - anders als im Stand der Technik - nicht zu einer Bewegung der Dosierflüssigkeit durch die Pipettieröffnung in die Pipettierspitze hinein führt.

Die vorliegende Erfindung wird nachfolgend anhand der beiliegenden Zeichnungen näher erläutert werden. Es stellt dar:
- Fig. 1a: eine erfindungsgemäße Pipettiervorrichtung, in welcher ein erfindungsgemäßes Dispensationsverfahren abläuft, in der Ausgangsstellung vor Beginn der Dispensation,
- Fig. 1b: die Pipettiervorrichtung von Figur 1a nach Ablauf der Pipettierbewegung des Kolbens mit dem Kolben in der unteren Totpunktstellung,
- Fig. 1c: die Pipettiervorrichtung der Figuren 1a und 1b nach Vollendung der Kolbenbewegung zur Dispensation eines Einzel-Dosiervolumens von 1 µl,
- Fig. 2: grobschematische Graphen von zeitlichen Verläufen eines Steuersignals und der damit bewirkten Kolbenbewegung des Pipettiervorgangs der Figuren 1a bis 1c,
- Fig. 3: die Darstellung von Figur 2 mit lediglich dem Steuersignal und
- Fig. 4: die Darstellung von Figur 2 mit lediglich der Ort-Zeit-Kurve des Kolbens.

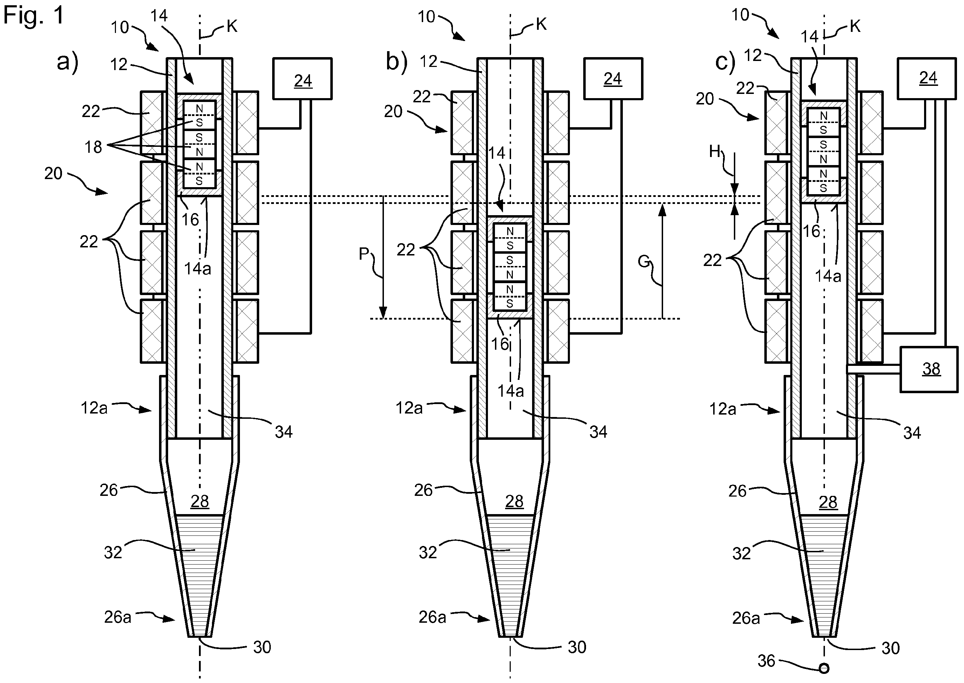

In den Figuren 1a bis c ist eine erfindungsgemäße Pipettiervorrichtung allgemein mit 10 bezeichnet. Diese umfasst einen Pipettierkanal 12, gebildet durch einen Zylinder, welcher sich längs einer als geradlinige Kanalachse ausgestalteten Kanalbahn K erstreckt. In diesem Pipettierkanal 12 ist ein Kolben 14 längs der Kanalbahn K beweglich aufgenommen.

Der Kolben 14 umfasst zwei Endkappen 16 (aus Gründen der Übersichtlichkeit ist nur die untere in Figur 1 mit Bezugszeichen versehen), zwischen welchen eine Mehrzahl von Permanentmagneten 18 (im vorliegenden Beispiel drei Permanentmagnete 18) aufgenommen sind. Die Permanentmagnete 18 sind zur Erzielung eines längs der Kanalbahn K trennscharfen Magnetfelds längs der Kanalachse K polarisiert und paarweise mit aufeinander zuweisenden gleichnamigen Polen angeordnet. Aus dieser Anordnung resultiert ein vom Kolben 14 ausgehendes Magnetfeld, welches um die Kanalachse K weitestgehend gleichförmig, also im Wesentlichen rotationssymmetrisch bezüglich der Kanalachse K ist und welches längs der Kanalachse K einen hohen Gradienten der magnetischen Feldstärke aufweist, sodass sich ungleichnamige Polarisierungszonen trennscharf längs der Kanalbahn K alternierend abwechseln. Damit kann beispielsweise durch Hall-Sensoren (nicht dargestellt) eine hohe Positionsauflösung bei der Positionserfassung des Kolbens 14 längs der Kanalachse K erreicht werden und es kann eine sehr effiziente Ankopplung eines äußeren Magnetfelds an den Kolben 14 erreicht werden.

Die Endkappen 16 sind bevorzugt aus reibungsarmem, Graphit umfassenden Material gebildet, wie es beispielsweise von kommerziell erhältlichen Kolben der Fa. Airpot Corporation in Norwalk, Connecticut, (US) bekannt ist. Um die von diesem Material bereitgestellte geringe Reibung möglichst vollständig ausschöpfen zu können, ist der Pipettierkanal 12 bevorzugt als Glaszylinder ausgebildet, so dass bei einer Bewegung des Kolbens 14 längs der Kanalachse K das Graphit umfassende Material äußerst reibungsarm an einer Glasfläche gleitet.

Der Kolben 14 bildet somit einen Läufer eines Linearmotors 20, dessen Stator von den Pipettierkanal 12 umgebenden Spulen 22 (hier sind beispielhaft lediglich vier Spulen dargestellt) gebildet ist.

Es sei ausdrücklich darauf hingewiesen, dass die Figuren 1a bis 1c lediglich eine grobschematische Längsschnittdarstellung einer erfindungsgemäßen Pipettiervorrichtung (10) zeigt, die keinesfalls maßstäblich zu verstehen ist. Weiterhin sind Mehrzahlen von Bauteilen durch eine beliebige Bauteilanzahl, wie etwa drei Permanentmagnete 18 und vier Spulen 22, dargestellt. Tatsächlich kann sowohl die Anzahl der Permanentmagnete 18 wie auch die Anzahl der Spulen 22 größer oder auch kleiner als die dargestellte Anzahl sein.

Der Linearmotor 20, genauer seine Spulen 22, werden über eine Steuereinrichtung 24 angesteuert, die signalübertragungsmäßig mit den Spulen 22 verbunden ist. Als Signal gilt auch die Übertragung elektrischen Stroms zur Bestromung der Spulen und damit zur Erzeugung eines Magnetfelds durch diese.

An dem dosierseitigen Ende 12a des Pipettierkanals 12 ist in an sich bekannter Weise lösbar eine Pipettierspitze 26 angebracht. Die Verbindung der Pipettierspitze 26 mit dem dosierseitigen Längsende 12a des Pipettierkanals 12 ist ebenfalls lediglich grobschematisch dargestellt.

Die Pipettierspitze 26 definiert einen Pipettierraum 28 in ihrem Inneren, welcher am kopplungsfernen Längsende 26a ausschließlich durch eine Pipettieröffnung 30 zugänglich ist.

In dem in Figur 1 dargestellten Beispiel eines Dispensationsvorgangs ist im Pipettierraum 28 eine Menge an Dosierflüssigkeit 32 aufgenommen. Dies ist durch einen konventionellen Aspiriationsvorgang im quasi-synchronen Pipettierbetrieb durch dieselbe Pipettiervorrichtung 10 erfolgt.

Zwischen dem Kolben 14 und der Dosierflüssigkeit 32 befindet sich dauerhaft Arbeitsgas 34, welches als Kraftvermittler zwischen dem Kolben 14 und der Dosierflüssigkeit 32 dient.

Das Arbeitsgas 34 ist auch bei völlig entleerter Pipettierspitze 26 zwischen Kolben 14 und einer Dosierflüssigkeit 32 angeordnet, da die Pipettierspitze 26 zur Aspiration von Dosierflüssigkeit in einen entsprechenden Dosierflüssigkeitsvorrat eingetaucht wird, sodass in diesem Zustand wenigstens an der Pipettieröffnung 30 ein Meniskus der Dosierflüssigkeit vorhanden ist. Somit befindet sich Arbeitsgas 34 in jedem für einen Pipettiervorgang relevanten Zustand der Pipettiervorrichtung 10 dauerhaft vollständig zwischen dem Kolben 14 und einer Dosierflüssigkeit 32 und trennt diese voneinander.

Genauer befindet sich das Arbeitsgas 34 zwischen einer dosierseitigen Endfläche 14a des Kolbens 14, welche im vorliegenden Beispiel durch eine in axialer Richtung - bezogen auf die Kanalbahn K - zur Dosieröffnung 30 hin weisende Endfläche der Endkappe 16 gebildet ist.

Ausgehend von dem in Figur 1a gezeigten Zustand wird nachfolgend ein Dispensationsvorgang der erfindungsgemäßen Pipettiervorrichtung 10 sowie das ausgeführte Dispensationsverfahren beschrieben:
Zentraler Punkt der erfinderischen Idee der vorliegenden Anmeldung ist eine peitschenartige Bewegung des Kolbens 14. Diese peitschenartige Bewegung kommt - wie oben ausführlich beschrieben wurde - in mehrerlei Ausprägungen zum Ausdruck, von welchen jede für sich einen eigenen erfinderischen Gedanken gegenüber dem Stand der Technik darstellt.

Aufgrund des bereitgestellten bevorzugten Linearmotors 20 kann der Kolben 14 mit enormer Bewegungsdynamik längs der Kanalachse K bewegt werden. Zur Dispensation einer sehr kleinen Flüssigkeitsmenge, etwa 1 µl der Dosierflüssigkeit 32, wird der Kolben 14 zunächst schnell in Pipettierrichtung (hier: Dispensationsrichtung) zur Dosieröffnung 30 hin bewegt. Die Steuereinrichtung 24 steuert die Spulen 22 des Linearmotors 20 derart an, dass der Kolben 14 einen so großen Hub P ausführt, dass die dosierseitige Endfläche 14a des Kolbens 14 längs des Hubs P ein Vielfaches, etwa das 20-fache, des vorbestimmten Einzel-Dosiervolumens 36 (siehe Figur 1c) überstreicht. Der Kolben befindet sich dann in der in Figur 1b gezeigten Stellung am unteren Totpunkt seiner Bewegung in Pipettierrichtung, woraufhin der Kolben 14 zu einer Bewegung in Gegenpipettierrichtung (siehe Pfeil G) angetrieben wird. Die Gegenpipettierrichtung ist hier eine Aspirationsrichtung, in welcher eine Bewegung des Kolbens 14 eine Verringerung des Drucks des Arbeitsgases 34 zwischen dem Kolben 14 und der Dosierflüssigkeit 32 bewirkt.

Die Bewegung des Kolbens 14 in Pipettierrichtung dauert weniger als 10 ms. Wenn der Kolben 14 seinen unteren Totpunkt erreicht, hat sich noch kein Teil der Dosierflüssigkeit 32 von der Pipettierspitze 26 gelöst.

Der Kolben wird in Pipettierrichtung etwa mit einer maximalen Geschwindigkeit von etwa 10.000 µl/s bewegt und hierzu mit einer Beschleunigung von bis zu 8 x 10⁶ µl/s² beschleunigt und wieder verzögert. Die maximale Geschwindigkeit tritt allerdings nur kurzzeitig auf. Dies bedeutet, dass der Kolben in dem genannten Fall, in dem seine dosierseitige Endfläche 14a im Verlauf der Pipettierbewegung ein Volumen von etwa dem 20-fachen des Einzel-Dosiervolumens 36, also etwa 20 µl, überstreicht, für diese Pipettierbewegung etwa 6 bis 8 ms benötigt.

Die Dosierflüssigkeit 32 ist hier zu träge, um dieser Kolbenbewegung zu folgen. Stattdessen wird vom Kolben 14 ein Druckerhöhungspuls über das Arbeitsgas 34 hinweg zur Dosierflüssigkeit 32 in der Pipettierspitze 26 übertragen. Ausgehend von der in Figur 1b gezeigten Darstellung wird nun der Kolben 14 möglichst sofort zurück in Gegenpipettierrichtung beschleunigt, wobei der Bewegungshub G in Gegenpipettierrichtung im vorliegenden Fall insoweit geringer ist als der Hub P der Bewegung in Pipettierrichtung, dass die endseitige Kolbenfläche 14a im Verlauf der Bewegung in Gegenpipettierrichtung ein Gegenpipettiervolumen überstreicht, welches um das Einzel-Dosiervolumen 36 geringer ist als das überstrichene Pipettiervolumen.

Dies muss allerdings nicht so sein. Das Gegenpipettiervolumen kann auch genauso groß sein wie das Pipettiervolumen. Ein um das Einzel-Dosiervolumen 36 reduziertes Gegenpipettiervolumen hat jedoch den Vorteil, dass sich die Lage des pipettieröffnungsnäheren Meniskus nach dem Pipettieren nicht ändert, was vor allem im Aliquotierbetrieb vorteilhaft ist.

In der In Figur 1c gezeigten Endstellung der Pipettiervorrichtung 10 nach dem Ende des Pipettiervorgangs befindet sich die dosierseitige Endfläche 14a um einen resultierenden Hub H von der Ausgangsstellung der Figur 1a entfernt, wobei im dargestellten Beispiel die Kolbenfläche des Kolbens 14 multipliziert mit dem resultierenden Hub H dem Einzel-Dosiervolumen 36 entspricht.

Auch die Bewegung in Gegenpipettierrichtung läuft mit der genannten maximalen Geschwindigkeit ab, sodass auch diese Bewegung etwa 6 bis 8 ms benötigt. Mit zusätzlichen Verweilzeiten am unteren Totpunkt, welche durch Überwinden der Haftreibungsgrenze entstehen können, sowie unter Einbeziehung von etwaig auftretenden Bewegungsüberschwingern des Kolbens 14 um seine Soll-Position erfolgt die gesamte Kolbenbewegung bis zum Erreichen der Endstellung, wie sie in Figur 1c gezeigt ist, in etwa 14 bis 30 ms.

Erst nach der Umkehr der Kolbenbewegung von der Pipettierrichtung in die Gegenpipettierrichtung wird ein definiertes Einzel-Dosiervolumen 36 in Form eines Tropfens von der Pipettieröffnung 30 weggeschleudert. Dieser Tropfen bewegt sich längs der verlängert gedachten Kanalbahn K zu einem unter der Pipettieröffnung 30 platzierten Dosierziel, etwa einem Behälter oder einem Well.

Die Pipettierspitze 26 kann ein das Einzel-Dosiervolumen wesentlich übersteigendes Nenn-Pipettierraumvolumen aufweisen.

Die Bewegung des Kolbens 14 in Gegenpipettierrichtung verläuft wiederum so schnell, dass von der dosierseitigen Endfläche 14a zur Dosierflüssigkeit 32 im Pipettierraum 28 ein Druckverringerungspuls übertragen wird.

Der Druckerhöhungspuls der Kolbenbewegung in Pipettierrichtung bildet die steile steigende Flanke eines Druckimpulses, dessen steile fallende Flanke der Druckverringerungspuls der Kolbenbewegung in Gegenpipettierrichtung bildet. Je zeitlich kürzer die einzelne Kolbenbewegung ist, desto steiler ist die Flanke des ihr zugeordneten Druckveränderungspulses. Die beiden in entgegengesetzten Sinnen wirkenden Druckveränderungspulse können so einen "harten" Druckimplus mit steilen Flanken definieren.

Das Auftreffen des so gebildeten "harten" Druckimpulses führt zu dem äußerst präzise wiederholbaren Pipettierergebnis.

Überraschenderweise ist der hier vorgestellte Pipettiervorgang vor allem für das Dispensieren unabhängig von der Größe der gewählten Pipettierspitze 26. Die gleiche oben beschriebene Kolbenbewegung würde auch bei einer deutlich kleineren Pipettierspitze von etwa einem Nenn-Pipettierraumvolumen von 50 µl zu exakt dem gleichen Ergebnis führen, vorausgesetzt, das gleiche Arbeitsgas und die gleiche Dosierflüssigkeit werden weiterhin bei unveränderten Pipettierparametern verwendet.

Somit eignen sich die vorliegende erfindungsgemäße Pipettiervorrichtung und das vorgestellte erfindungsgemäße Pipettierverfahren hervorragend zum Aliquotieren von Flüssigkeiten aus selbst großen in Pipettierspitzen 26 aufgenommenen Vorräten von Dosierflüssigkeit 32. Auch über viele Aliquotier-Zyklen hinweg ändert sich das Pipettierverhalten der Pipettiervorrichtung 10 bei sonst gleichen Bedingungen nicht. Das Pipettierverhalten der erfindungsgemäßen Pipettiervorrichtung 10 ist somit auch unabhängig vom Füllungsgrad einer an den Pipettierkanal 12 angekoppelten Pipettierspitze 26.

In Figur 1c ist angedeutet, dass ein Drucksensor 38 den Druck im Inneren des Pipettierkanals 12, also den Druck des Arbeitsgases 34 zwischen der Dosierflüssigkeit 32 und der dosierseitigen Endfläche 14a des Kolbens 14, erfassen kann und über eine Signalleitung an die Steuereinrichtung 24 übertragen kann. Somit ist bei der Verwendung entsprechend schneller Drucksensoren 38 sogar eine vom Druck des Arbeitsgases 34 abhängige Bewegungsregelung des Kolbens zur Ausführung einer wie oben vorgestellten peitschenartigen Kolbenbewegung möglich.

Die Kolbenbewegung kann aufgrund der Massenträgheit dem die Bewegung begründenden Steuersignal möglicherweise nicht vollkommen exakt folgen. An Stellen großer dynamischer Kräfte - namentlich bei der Umkehr der Bewegungsrichtung von der Pipettierrichtung in die Gegenpipettierrichtung, aber auch beim Anhalten des Kolbens - kann der Kolben zum Überschwingen neigen. Entscheidend sind im Zweifel die die Bewegung begründenden Steuersignale, die Abbild einer Soll-Bewegung sind.

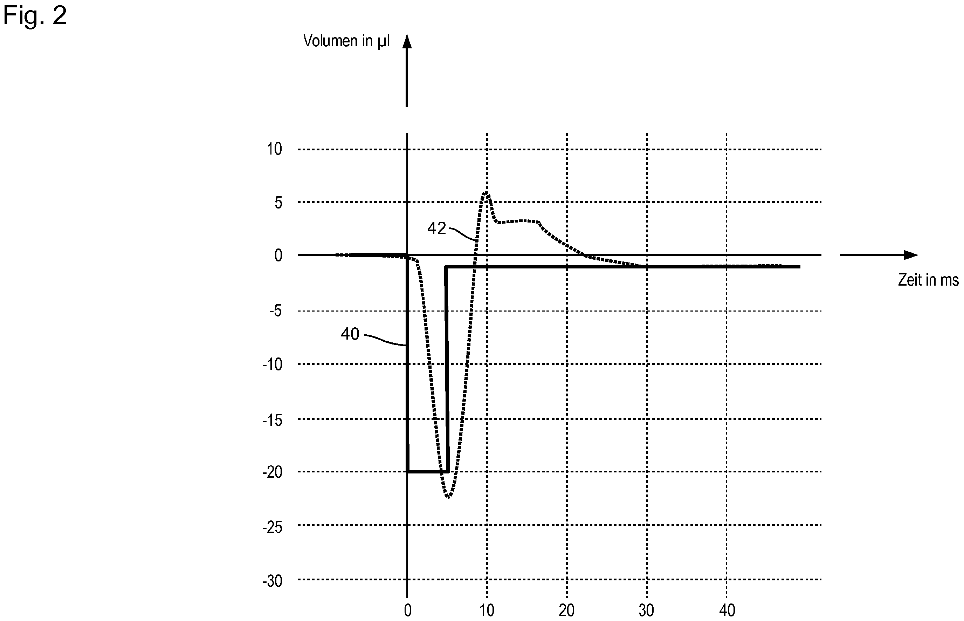

In Figur 2 ist grobschematisch und lediglich beispielhaft ein zeitlicher Verlauf 40 eines Steuersignals (durchgezogene Linie) und ein zeitlicher Verlauf 42 der Bewegung des Kolbens 14 (gestrichelte Linie) schematisiert dargestellt, wie sie bei einem Pipettiervorgang der Figuren 1a bis 1c vorliegen könnten.

Die aktuelle Kolbenstellung zu Beginn des Pipettiervorgangs, also die in Figur 1c gezeigte Kolbenstellung, ist in Figur 2 als Nullpunktslinie gewählt.

Die Abszisse der Darstellung von Figur 2 zeigt die Zeit in Millisekunden, wobei eine Rasterung von jeweils 10 ms gewählt ist.

Die Ordinate zeigt das Volumen in Mikroliter, wobei in Bezug auf die Ort-Zeit-Kurve 42 des Kolbens 14 das Volumen der Ordinatenachse das von der dosierseitigen Endfläche 14a des Kolbens 14 überstrichene Volumen angibt.

Zwar ist das Steuersignal des Graphen 40 ein elektrisches Signal, es kann jedoch als Soll-Ort-Zeit-Kurve des Kolbens 14 aufgefasst und daher ebenfalls in Mikrolitern im Sinne eines von der dosierseitigen Endfläche 14a des Kolbens 14 überstrichenen Soll-Volumens angegeben werden.

Das Steuersignal 40 ist ein Rechtecksignal, das zur Zeit t = 0 ms von 0 auf -20 µl springt, also dem 20-fachen des Einzel-Dosiervolumens 36. Das negative Vorzeichen ergibt sich aus der Bewegungsrichtung: ein bei Bewegung der dosierseitigen Endfläche 14a des Kolbens 14 zur Pipettieröffnung 30 hin überstrichenes Volumen ist negativ, ein bei Bewegung von der Pipettieröffnung weg überstrichenes Volumen ist positiv. Diese Vorzeichenkonvention gilt sowohl für das Steuersignal 40 wie auch für die tatsächliche Bewegung 42 des Kolbens 14.

Nach 5 ms springt das rechteckförmige Steuersignal 40 zurück auf -1 µl, sodass das Steuersignal 40 - wie zuvor im Zusammenhang mit den Figuren 1a bis 1c beschrieben - ein Soll-Pipettiervolumen von 20 µl und ein Soll-Gegenpipettiervolumen von 19 µl anzeigt, welche innerhalb von 5 ms überstrichen werden sollen.

Der Kolben 40 kann dem rechteckförmigen Steuersignal 40 naturgemäß nicht exakt folgen, da ein rechteckförmiges Steuersignal eine nahezu unendlich schnelle Bewegung erfordern würde, um der fallenden Flanke (die das Pipettiervolumen anzeigt) und der steigenden Flanke (die das Gegenpipettiervolumen anzeigt) des Steuersignals 40 zu folgen.

Aufgrund der zu überwindenden Reibungskräfte sowie der ebenfalls zu überwindenden Massenträgheit und anderen zusätzlichen Einflüssen, wie etwa der am Arbeitsgas zu verrichtenden Arbeit, setzt sich der Kolben 14 zwar etwa 1 ms nach dem Start des Steuersignals bei 0 ms in Bewegung, benötigt aber etwa weitere 4 ms, um zu seinem unteren Totpunkt zu gelangen, bei welchem der Kolben 14 seine Bewegungsrichtung sofort umkehrt.

Dies bedeutet, dass der Kolben 14 seinen unteren Totpunkt etwa dann erreicht, wenn das Steuersignal 40 auf seinen Endwert von -1 µl gesprungen ist.

Aufgrund der Massenträgheit kann die Kolbenbewegung in Pipettierrichtung geringfügig überschießen, sodass die dosierseitige Endfläche 14a nicht nur die vom Steuersignal 40 tatsächlich angewiesenen -20 µl, sondern tatsächlich etwa -22,5 µl überstreichen kann, bis es zur Bewegungsrichtungsumkehr kommt.

Wie in der Kurve 42 von Figur 2 zu erkennen ist, erreicht der Kolben 14 bei etwa 8 ms seine Zielposition, schwingt jedoch erheblich über und erreicht tatsächlich erst etwa 29 ms nach Beginn des Steuersignals den Stillstand bei seiner Soll-Endposition.

Das dargestellte Überschwingen gegen Ende der Kolbenbewegung in Gegenpipettierrichtung hat jedoch keinen Einfluss auf das tatsächlich pipettierte Dosierflüssigkeitsvolumen.

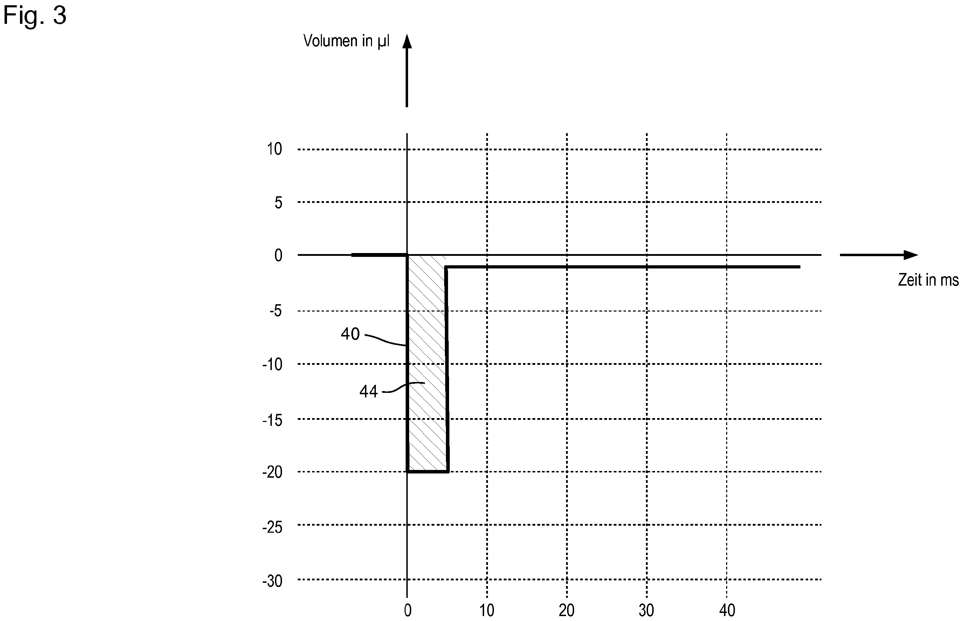

In Figur 3 ist lediglich die Steursignalkurve 40 erneut dargestellt. Wie oben bereits allgemein erläutert wurde, ist das Integral des Steuersignals 40 über die Zeit vom Beginn des die Kolbenbewegung in Pipettierrichtung bewirkenden Steuersignal(abschnitt)s bis zum Ende des die Kolbenbewegung in Gegenpipettierrichtung bewirkenden Steuersignal(abschnitt)s ein Maß für das tatsächlich bei dem so angesteuerten Pipettiervorgang pipettierte Dosierflüssigkeitsvolumen. Das so beschriebene Integral entspricht der vom Steuersignal 40 innerhalb der genannten zeitlichen Grenzen umschriebenen Fläche. Diese Fläche ist in Figur 3 als Fläche 44 schraffiert dargestellt. Die Fläche reicht bis zur Nulllinie des Volumens, von welcher das Steuersignal 40 ausging. Daher ist es unerheblich, ob das Steuersignal tatsächlich bis zur Nulllinie zurückkehrt oder um das Einzel-Dosiervolumen 36 in Pipettierrichtung verschoben endet.

Den genauen Zusammenhang zwischen der vom Steuersignal 40 umschriebenen Fläche 44 und dem damit tatsächlich pipettierten Dosierflüssigkeitsvolumen lässt sich für unterschiedliche Flüssigkeitsklassen sehr einfach empirisch feststellen und in einem Datenspeicher ablegen.

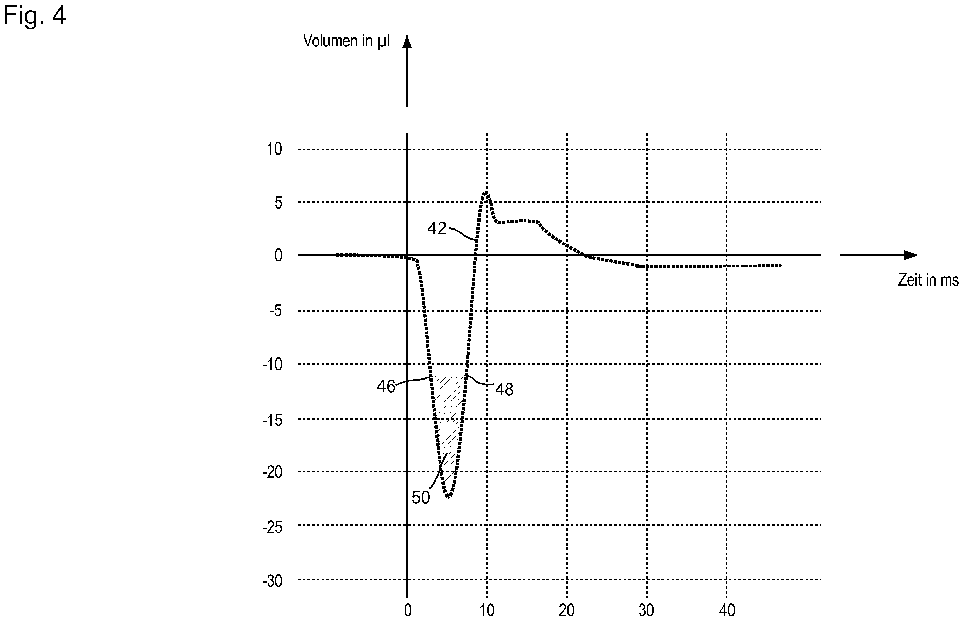

In Figur 4 ist alleine die Ort-Zeit-Kurve 42 des Kolbens 14 ohne die Steuerkurve 40 dargestellt. Mit 46 und 48 ist der Ort der "Halbwegsweite" des Kolbens 14 zwischen seiner Startstellung bei 0 µl und seinem Umkehrpunkt der Bewegungsrichtung bei etwa -22,5 µl bezeichnet. Die Halbwegsweite liegt daher bei etwa bei -11,25 µl.

Auch das zeitliche Integral der Ort-Zeit-Kurve des Kolbens 14 - etwa repräsentiert durch die Ort-Zeit-Kurve der dosierseitigen Kolbenfläche 14a als einem Bezugspunkt des Kolbens 14 - zwischen dem Durchgang durch den Ort der Halbwegsweite bei der Bewegung in Pipettierrichtung und dem erneuten Durchgang durch diesen Ort während seiner Bewegung in Gegenpipettierrichtung ist ein Maß für das mit der Kolbenbewegung tatsächlich pipettierte Einzel-Dosiervolumen 36. Eine durch dieses Integral gebildete Fläche ist als Fläche 50 in Figur 4 schraffiert dargestellt. Der Flächeninhalt der Fläche 50 ist ebenso ein Maß für das tatsächlich pipettierte Einzel-Dosiervolumen 36 wie der Flächeninhalt der Fläche 44 aus Figur 3. Der Zusammenhang zwischen dem Flächeninhalt der Fläche 50 und dem tatsächlich pipettierten Einzel-Dosiervolumen 36 kann jedoch ein anderer sein als jener zwischen dem Flächeninhalt der Fläche 44 und dem Einzel-Dosiervolumen 36. Auch dieser Zusammenhang lässt sich für unterschiedliche Flüssigkeitsklassen einfach empirisch ermitteln und in einem Datenspeicher der Pipettiervorrichtung hinterlegen.

Somit lassen sich sehr kleine Einzel-Dosiervolumen 36 von weniger als 5 µl in höchstem Maße wiederholgenau mit der gleichen Pipettiervorrichtung 10 pipettieren, mit welcher auch große Pipettiervolumen von mehreren 100 µl pipettiert werden können.

## Patentansprüche

1. Pipettiervorrichtung (10) zum Pipettieren von Dosierflüssigkeiten (32), wobei das Pipettieren ein Aspirieren und ein Dispensieren der Dosierflüssigkeiten (32) umfasst, mit einem sich längs einer Kanalbahn (K) erstreckenden Pipettierkanal (12), in welchem ein wenigstens abschnittsweise als Festkörper ausgebildeter Kolben (14) längs der Kanalbahn (K) beweglich aufgenommen ist, um durch Bewegung längs der Kanalbahn (K) den Druck eines Arbeitsgases (34) zu verändern, welches den Kolben (14) auf einer der Dosierflüssigkeit zugewandten Dosierseite benetzt, wobei die Pipettiervorrichtung (10) einen Bewegungsantrieb (20) für den Kolben (14) umfasst, mit welchem der Kolben (14) zu einer Bewegung längs der Kanalbahn (K) antreibbar ist, wobei die Pipettiervorrichtung (10) eine Steuereinrichtung (24) zur Steuerung des Bewegungsantriebs (20) aufweist, und wobei wenigstens die zur Dosierflüssigkeit hinweisende dosierseitige Endfläche (14a) des Kolbens (14) als Festkörper ausgebildet ist,
**dadurch gekennzeichnet, dass** die Steuereinrichtung (24) dazu ausgebildet ist, den Bewegungsantrieb (20) im Dispensationsbetrieb derart zu betreiben, dass der Kolben (14) zunächst in einer den Druck des Arbeitsgases (34) erhöhenden Dispensationsrichtung längs der Kanalbahn (K) bewegt wird und nachfolgend in einer den Druck des Arbeitsgases (34) verringernden, der Dispensationsrichtung entgegengesetzten Aspirationsrichtung bewegt wird, wobei die Steuereinrichtung (24) dazu ausgebildet ist, zur Pipettierung eines vorbestimmten Einzel-Dosiervolumens (36) von weniger als 5 µl den Bewegungsantrieb (20) derart zu betreiben, dass der Kolben (14) in Pipettierrichtung (P) bewegt wird und dabei seine dosierseitige Endfläche (14a) ein Pipettiervolumen überstreicht, welches um nicht weniger als das 1,4-fache größer als das Einzel-Dosiervolumen (36) ist, und dass der Kolben (14) anschließend in einer der Pipettierrichtung (P) entgegengesetzten Gegenpipettierrichtung (G) bewegt wird und dabei seine dosierseitige Endfläche (14a) ein Gegenpipettiervolumen überstreicht, wobei dann, wenn das Pipettieren ein Aspirieren ist, mit "Pipettierrichtung" eine Bewegungsrichtung des Kolbens (14) bezeichnet ist, welche ein Einsaugen von Dosierflüssigkeit in einen Pipettierraum (28) der Pipettiervorrichtung (10) bewirkt, und wobei dann, wenn das Pipettieren ein Dispensieren ist, mit "Pipettierrichtung" eine Bewegungsrichtung des Kolbens (14) bezeichnet ist, welche ein Ausschieben von Dosierflüssigkeit aus dem Pipettierraum (28) der Pipettiervorrichtung (10) bewirkt, wobei zwischen dem Beginn des Steuersignals der Steuereinrichtung (24) zum Antrieb des Kolbens (14) in Pipettierrichtung (P) und dem Ende des Steuersignals zum Antrieb des Kolbens (14) in Gegenpipettierrichtung (G) nicht mehr als 50 ms verstreichen.

2. Pipettiervorrichtung nach Anspruch 1,
**dadurch gekennzeichnet, dass** zwischen den Zeitpunkten, in welchen der Kolben (14) in Pipettierrichtung (P) und in Gegenpipettierrichtung (G) jeweils den Ort erreicht, welcher dem halben Weg zwischen Kolben-Startstellung und Kolben-Umkehrort entspricht, nicht mehr als 50 ms verstreichen.

3. Pipettiervorrichtung nach Anspruch 1 oder 2,
**dadurch gekennzeichnet, dass** das Pipettiervolumen nicht weniger als das Fünffache, vorzugsweise nicht weniger als das Zehnfache, besonders bevorzugt nicht weniger als das Dreißigfache und nicht mehr als das 100-fache, bevorzugt nicht mehr als das Sechzigfache des Einzel-Dosiervolumens (36) beträgt.

4. Pipettiervorrichtung nach einem der vorhergehenden Ansprüche,
**dadurch gekennzeichnet, dass** das Gegenpipettiervolumen gleich dem Pipettiervolumen ist oder um das Einzel-Dosiervolumen (36) kleiner als das Pipettiervolumen ist.

5. Pipettiervorrichtung nach einem der vorhergehenden Ansprüche,
**dadurch gekennzeichnet, dass** die Steuereinrichtung (24) dazu ausgebildet ist, zur Dispensation eines vorbestimmten Einzel-Dosiervolumens (36) von weniger als 5 µl im Jet-Modus, in welchem ein vorbestimmtes dispensiertes Flüssigkeitsvolumen (36) eine Pipettieröffnung (30) der Pipettiervorrichtung (10) verlassen hat, bevor es eine Oberfläche eines Dosierzieles erreicht, den Bewegungsantrieb (20) zur Bewegungsrichtungsumkehr des Kolbens (14a) von der Dispensationsrichtung in die Aspirationsrichtung anzusteuern, bevor sich das vorbestimmte Flüssigkeitsvolumen (36) von der Pipettieröffnung (30) ablöst.

6. Pipettiervorrichtung nach einem der vorhergehenden Ansprüche,
**dadurch gekennzeichnet, dass** die Steuereinrichtung (24) dazu ausgebildet ist, zur Aspiration eines vorbestimmten Einzel-Dosiervolumens (36) von weniger als 5 µl den Bewegungsantrieb (20) derart zu betreiben, dass der Kolben (14) in Aspirationsrichtung bewegt wird und, bevor das vorbestimmte Einzel-Dosiervolumen (36) vollständig aspiriert ist, den Bewegungsantrieb (20) zu einer Richtungsumkehr des Kolbens (14) anzusteuern, so dass der Kolben (14) in Dispensationsrichtung bewegt wird.

7. Pipettiervorrichtung nach einem der vorhergehenden Ansprüche,
**dadurch gekennzeichnet, dass** die Steuereinrichtung (24) und der Bewegungsantrieb (20) zur Pipettierung eines vorbestimmten Einzel-Dosiervolumens (36) von weniger als 5 µl dazu ausgebildet sind, den Kolben (14) mit einer Spitzengeschwindigkeit von wenigstens 5000 µl/s, bevorzugt von wenigstens 10000 µl/s und nicht mehr als 25000 µl/s zu bewegen.

8. Pipettiervorrichtung nach einem der vorhergehenden Ansprüche,
**dadurch gekennzeichnet, dass** die Pipettiervorrichtung (10) zur lösbaren Aufnahme von Pipettierspitzen (26) mit einem Nenn-Pipettierraumvolumen ausgebildet ist, welches wenigstens das Zehnfache, vorzugsweise wenigstens das Zwanzigfache, besonders bevorzugt wenigstens das Fünfzigfache, höchstbevorzugt wenigstens das Hundertfache des Einzel-Dosiervolumens (36) beträgt.

9. Pipettiervorrichtung nach einem der vorhergehenden Ansprüche,
**dadurch gekennzeichnet, dass** die Pipettiervorrichtung (10) zum Aliquotieren ausgebildet ist.

10. Pipettiervorrichtung nach Anspruch 9,
**dadurch gekennzeichnet, dass** die Pipettiervorrichtung (10) im Aliquotierbetrieb dazu ausgebildet ist, eine Mehrzahl von Dispensationsvorgängen auszuführen, bei welchen jeweils das Pipettiervolumen und das Gegenpipettiervolumen gleich groß sind.

11. Pipettiervorrichtung nach Anspruch 9 oder 10,
**dadurch gekennzeichnet, dass** die Pipettiervorrichtung (10) im Aliquotierbetrieb dazu ausgebildet ist, eine Mehrzahl von Dispensationsvorgängen auszuführen, bei welchen jeweils das Gegenpipettiervolumen um das Einzel-Dosiervolumen (36) kleiner ist als das Pipettiervolumen.

12. Pipettiervorrichtung nach einem der vorhergehenden Ansprüche,
**dadurch gekennzeichnet, dass** der Kolbenhub in Pipettierrichtung (P) oder/und der Kolbenhub in Gegenpipettierrichtung (G) oder/und die Kolbengeschwindigkeit oder/und die Kolbenbeschleunigung veränderbar ist.

13. Pipettiervorrichtung nach einem der vorhergehenden Ansprüche,
**dadurch gekennzeichnet, dass** die Steuereinrichtung (24) dazu ausgebildet ist, den Kolben (14) zur Pipettierung eines vorbestimmtes Einzel-Dosiervolumens (36) von mehr als 5 µl mit einer Spitzengeschwindigkeit von nicht mehr als 1000 µl/s zu bewegen.

14. Pipettiervorrichtung nach einem der vorhergehenden Ansprüche,
**dadurch gekennzeichnet, dass** sie dazu ausgebildet ist, ein auswählbares Einzel-Dosiervolumen (36) in einem Dosiervolumenbereich von 100 nl bis 100 µl, vorzugsweise von 100 nl bis 1000 µl mit einer Volumenabweichung von nicht mehr als 2 % bezogen auf das Nenn-Volumen reproduzierbar zu pipettieren.

15. Pipettiervorrichtung nach einem der vorhergehenden Ansprüche,
**dadurch gekennzeichnet, dass** der Bewegungsantrieb (20) einen Linearmotor (20) umfasst.

16. Pipettiervorrichtung nach Anspruch 15,
**dadurch gekennzeichnet, dass** der Kolben (14) der Läufer des Linearmotors (20) ist, so dass das elektromagnetische Feld des Linearmotor-Stators (22) unmittelbar mit dem Kolben (14) zu dessen Beschleunigung und Verzögerung wechselwirkt.

17. Pipettiervorrichtung nach Anspruch 16,
**dadurch gekennzeichnet, dass** der Kolben (14) eine Mehrzahl von Permanentmagneten (18) aufweist, welche längs der Kanalbahn (K) aufeinander folgend mit Polarisierungsrichtung längs der Kanalbahn (K) und mit längs der Kanalbahn (K) unmittelbar einander gegenüberliegenden gleichnamigen Polen vorgesehen sind.

18. Pipettiervorrichtung nach einem der vorhergehenden Ansprüche,
**dadurch gekennzeichnet, dass** sie eine Mehrzahl von parallelen Pipettierkanälen (12) aufweist, wobei der Abstand eines Pipettierkanals (12) von einem nächstgelegenen parallelen Pipettierkanal (12) nicht größer als 12 mm ist.

19. Pipettierverfahren zum Pipettieren, also zum Aspirieren und Dispensieren, eines vorbestimmten Einzel-Dosiervolumens (36) einer Dosierflüssigkeit (32), umfassend die folgenden Schritte:
- Bereitstellen einer Arbeitsgasmenge und eines wenigstens teilweise mit dem Arbeitsgas (34) gefüllten Pipettierraums (28), welcher durch eine Pipettieröffnung (30) hindurch zugänglich ist,
- Bereitstellen eines längs einer Kanalbahn (K) in Pipettierrichtung (P) und in hierzu entgegengesetzter Gegenpipettierrichtung (G) beweglichen Kolbens (14), von welchem wenigstens die zur Dosierflüssigkeit hinweisende dosierseitige Endfläche (14a) als Festkörper ausgebildet ist,
- Bewegen des Kolbens (14) längs der Kanalbahn (K) und dadurch Änderung des Drucks des Arbeitsgases (14) mit der der Pipettieröffnung (30) zugewandten dosierseitigen Endfläche (14a) des Kolbens (14) und dadurch Pipettieren der Dosierflüssigkeit (32),
**dadurch gekennzeichnet, dass** das Bewegen des Kolbens (14) längs der Kanalbahn (K) zum Pipettieren eines Einzel-Dosiervolumens (36) von weniger als 5 µl folgende Unterschritte umfasst:
- Bewegen des Kolbens (14) ausgehend von einer Startstellung in Pipettierrichtung (P) und dabei Überstreichen eines Pipettiervolumens mit der dosierseitigen Endfläche (14a), welches um nicht weniger als das 1,4-fache größer als das Einzel-Dosiervolumen (36) ist, und anschließend
- Bewegen des Kolbens (14) in der Gegenpipettierrichtung (G),
wobei dann, wenn das Pipettieren ein Aspirieren ist, mit "Pipettierrichtung" eine Bewegungsrichtung des Kolbens bezeichnet ist, welche ein Einsaugen von Dosierflüssigkeit in einen Pipettierraum der Pipettiervorrichtung bewirkt, und wobei dann, wenn das Pipettieren ein Dispensieren ist, mit "Pipettierrichtung" eine Bewegungsrichtung des Kolbens bezeichnet ist, welche ein Ausschieben von Dosierflüssigkeit aus dem Pipettierraum der Pipettiervorrichtung bewirkt,
wobei zwischen den Zeitpunkten, in welchen der Kolben (14) in Pipettierrichtung (P) und in Gegenpipettierrichtung (G) jeweils den Ort erreicht, welcher dem halben Weg zwischen Kolben-Startstellung und Kolben-Umkehrort entspricht, nicht mehr als 50 ms verstreichen.

20. Pipettierverfahren nach Anspruch 19,
**dadurch gekennzeichnet, dass** beim Dispensieren die Richtungsumkehr des Kolbens (14) von der Dispensationsrichtung in die Aspirationsrichtung erfolgt, bevor sich das vorbestimmte Einzel-Dosiervolumen (36) vollständig von der Pipettieröffnung (30) abgelöst hat.

21. Pipettierverfahren nach einem der Ansprüche 19 oder 20,
**dadurch gekennzeichnet, dass** beim Aspirieren die Richtungsumkehr des Kolbens (14) von der Aspirationsrichtung in die Dispensationsrichtung erfolgt, bevor das vorbestimmte Einzel-Dosiervolumen (36) vollständig durch die Pipettieröffnung (30) hindurch geströmt ist.

22. Pipettierverfahren nach einem der Ansprüche 19 bis 21,
**dadurch gekennzeichnet, dass** der Kolben (14) in Pipettierrichtung (P) oder/und in Gegenpipettierrichtung (G) mit einer Spitzengeschwindigkeit von wenigstens 5000 µl/s, bevorzugt von wenigstens 10000 µl/s und von nicht mehr als 25000 µl/s bewegt wird.

## Claims

1. A pipetting device (10) for pipetting dosing liquids (32), wherein pipetting comprises an aspiration and a dispensation of the dosing liquid (32), comprising a pipetting channel (12) extending along a channel path (K), in which a piston (14) configured at least partially as a solid body is accommodated to be movable along the channel path (K) in order to change, by way of movement along the channel path (K), the pressure of a working gas (34) that wets the piston (14) on a dosing side facing the dosing liquid, wherein the pipetting device (10) comprises a movement drive (20) for the piston (14) by means of which the piston (14) is drivable to move along the channel path (K), wherein the pipetting device (10) has a control unit (24) for controlling the movement drive (20), and wherein at least the dosing end face of the piston facing the dosing liquid is configured as a solid body,
**characterized in that** the control unit (24) is configured to operate the movement drive (20) in dispensation operation in such a way that the piston (14) is initially moved along the channel path (K) in a dispensation direction increasing the pressure of the working gas (34), and is subsequently moved in an aspiration direction opposite the dispensation direction reducing the pressure on the working gas (34), wherein the control unit (24) is configured to operate the movement drive (20) for pipetting a predetermined single dosing volume (36) of less than 5 µl in such a way that the piston (14) is moved in the pipetting direction (P) and its dosing side end face (14a) thereby sweeps over a pipetting volume which is not less than 1.4 times greater than the single dosing volume (36), and that the piston (14) is subsequently moved in a counter pipetting direction (G) opposite the pipetting direction (P) and its dosing side end face (14a) thereby sweeps over a counter pipetting volume, wherein when pipetting is an aspiration, "pipetting direction" designates a movement direction of the piston (14) which causes an intake of dosing liquid into a pipette cavity (28) of the pipetting device (10), and wherein when pipetting is a dispensation, "pipetting direction" designates a movement direction of the piston (14) which causes an expulsion of dosing liquid out of the pipette cavity (28) of the pipetting device (10), wherein not more than 50 ms elapse between the beginning of the control signal from the control unit (24) for driving the piston (14) in the pipetting direction (P) and the end of the control signal for driving the piston (14) in the counter pipetting direction (G).

2. The pipetting device according to Claim 1,
**characterized in that** not more than 50 ms elapse between the time points at which the piston (14) reaches the point, in the pipetting direction (P) and in the counter pipetting direction (G) respectively, which corresponds to the halfway point between the piston start position and the piston reversal point.

3. The pipetting device according to Claim 1 or 2,
**characterized in that** the pipetting volume is not less than five times, preferably not less than ten times, particularly preferably not less than thirty times, and not more than 100 times, preferably not more than sixty times the single dosing volume (36).

4. The pipetting device according to one of the preceding claims,
**characterized in that** the counter pipetting volume is equal to the pipetting volume or is less than the pipetting volume by the single dosing volume (36).

5. The pipetting device according to one of the preceding claims,
**characterized in that** the control unit (24) is configured, for dispensing a predetermined single dosing volume (36) of less than 5 µ in jet mode, in which a predetermined dispensed liquid volume (36) has left a pipette opening (30) of the pipetting device (10) before said liquid volume reaches a surface of a dosing target, to control the movement drive (20) to reverse the movement direction of the piston (14a) from the dispensation direction into the aspiration direction before the predetermined liquid volume (36) detaches from the pipette opening (30).

6. The pipetting device according to one of the preceding claims,
**characterized in that** the control unit (24) is configured, for aspirating a predetermined single dosing volume (36) of less than 5 µl, to operate the movement drive (20) in such a way that the piston (14) is moved in the aspiration direction and to control the movement drive (20) to reverse the direction of the piston (14) so that the piston (14) is moved in the dispensation direction before the predetermined single dosing volume (36) is completely aspirated.

7. The pipetting device according to one of the preceding claims,
**characterized in that** the control unit (24) and the movement drive (20) are configured, in order to pipette a predetermined single dosing volume (36) of less than 5 µl, to move the piston (14) at a peak speed of at least 5000 µl/s, preferably at least 10,000 µl/s, and not more than 25,000 µl/s.

8. The pipetting device according to one of the preceding claims,
**characterized in that** the pipetting device (10) is configured for detachable accommodation of pipette tips (26) with a nominal pipette cavity volume that is at least ten times, preferably at least twenty times, particularly preferably at least fifty times, most preferably at least one-hundred times the single dosing volume (36).

9. The pipetting device according to one of the preceding claims,
**characterized in that** the pipetting device (10) is configured for aliquoting.

10. The pipetting device according to Claim 9,
**characterized in that** the pipetting device (10) in aliquot operation is configured to carry out a pluralityof dispensation processes in which the pipetting volumes and the counter pipetting volumes respectively are the same size.

11. The pipetting device according to Claim 9 or 10,
**characterized in that** the pipetting device (10) in aliquot operation is configured to carry out a plurality of dispensation processes in which the counter pipetting volumes respectively are less than the pipetting volumes by the single dosing volume (36).

12. The pipetting device according to one of the preceding claims,
**characterized in that** the piston stroke in the pipetting direction (P) and/or the piston stroke in the counter pipetting direction (G) and/or the piston speed and/or the piston acceleration are changeable.

13. The pipetting device according to one of the preceding claims,
**characterized in that** the control unit (24) is configured to move the piston (14) for pipetting a predetermined single dosing volume (36) of more than 5 µl at a peak speed of not more than 1000 µl/s.

14. The pipetting device according to one of the preceding claims,
**characterized in that** it is configured to reproducibly pipette a single dosing volume (36) that can be selected in a dosing volume range from 100 nl to 100 µl, preferably from 100 nl to 1000 µl, with a volume deviation of not more than 2% relative to the nominal volume.

15. The pipetting device according to one of the preceding claims,
**characterized in that** the movement drive (20) comprises a linear motor (20).

16. The pipetting device according to Claim 15,
**characterized in that** the piston (14) is the rotor of the linear motor (20) so that the electromagnetic field of the linear motor stator (22) interacts directly with the piston (14) for its acceleration and deceleration.

17. The pipetting device according to Claim 16,
**characterized in that** the piston (14) has a plurality of permanent magnets (18) which are provided following one another along the channel path (K), with the polarization direction along the channel path (K), and with like poles directly opposite one another along the channel path (K).

18. The pipetting device according to one of the preceding claims,
**characterized in that** it has a plurality of parallel pipetting channels (12), wherein the distance of one pipetting channel (12) to an adjacent parallel pipetting channel (12) is not greater than 12 mm.

19. A pipetting method for pipetting, thus for aspirating and dispensing, a predetermined single dosing volume (36) of a dosing liquid (32), comprising the following steps:
- Providing a quantity of working gas and a pipetting cavity (28), which is accessible through a pipette opening (30) and is at least partially filled with the working gas (34),
- Providing a piston (14) moveable along a channel path (K) in the pipetting direction (P) and in a counter pipetting direction (G) opposite thereto, of which at least the dosing end face facing the dosing liquid is configured as a solid body, and
- Moving the piston (14) along the channel path (K) and thus changing the pressure of the working gas (14) by means of the dosing side end face (14a) of the piston (14) facing the pipette opening (14) and by this means pipetting the dosing liquid (32),
**characterized in that** the movement of the piston (14) along the channel path (K) for pipetting a single dosing volume (36) of less than 5 µl comprises the following substeps:
- Moving the piston (14), starting from a start position, in the pipetting direction (P) and thereby sweeping over a pipetting volume with the dosing side end face (14a), which pipetting volume is not less than 1.4 times greater than the single dosing volume (36), and subsequently
- Moving the piston (14) in the counter pipetting direction (G),
wherein when pipetting is an aspiration, "pipetting direction" designates a movement direction of the piston which causes an intake of dosing liquid into a pipette cavity of the pipetting device, and wherein when pipetting is a dispensation, "pipetting direction" designates a movement direction of the piston which causes an expulsion of dosing liquid out of the pipette cavity of the pipetting device, wherein not more than 50 ms elapse between the time points at which the piston (14) reaches that point, in the pipetting direction and the counter pipetting direction respectively, which corresponds to the halfway point between the piston start position and the piston reversal point.

20. The pipetting method according to Claim 19,
**characterized in that,** during dispensation, the reversal of direction of the piston (14) from the dispensation direction into the aspiration direction is carried out before the predetermined single dosing volume (36) has completely separated from the pipette opening (30).

21. The pipetting method according to Claim 19 or 20,
**characterized in that,** during aspiration, the reversal of direction of the piston (14) from the aspiration direction into the dispensation direction is carried out before the predetermined single dosing volume (36) has completely flowed through the pipette opening (30).

22. The pipetting method according to one of Claims 19 through 21,
**characterized in that** the piston (14) is moved in the pipetting direction (P) and/or in the counter pipetting direction (G) at a peak speed of at least 5000 µl/s, preferably at least 10,000 µl/s, and not more than 25,000 µl/s.

## Revendications

1. Dispositif de pipetage (10) pour pipeter des liquides de dosage (32), le pipetage comprenant une aspiration et une distribution des liquides de dosage (32), avec un canal de pipetage (12) qui s'étend le long d'un trajet de canal (K) et dans lequel un piston (14) formé au moins par sections comme corps solide est reçu de manière mobile le long du trajet du canal (K), pour modifier, par mouvement le long du trajet de canal (K), la pression d'un gaz de travail (34) qui mouille le piston (14) sur un côté de dosage tourné vers le liquide de dosage, le dispositif de pipetage (10) comprenant un entraînement de mouvement (20) pour le piston (14), avec lequel le piston (14) peut être entraîné pour se déplacer le long du trajet de canal (K), le dispositif de pipetage (10) comportant un dispositif de commande (24) pour commander l'entraînement de mouvement (20), et où au moins la face d'extrémité du côté dosage (14a) du piston (14) tournée vers le liquide de dosage est adaptée sous forme de corps solide,
**caractérisé en ce que** le moyen de commande (24) est adapté pour faire fonctionner l'entraînement de mouvement (20) en mode de distribution de sorte que le piston (14) est d'abord déplacé le long du trajet de canal (K) dans une direction de distribution augmentant la pression du gaz de travail (34) et ensuite dans une direction d'aspiration opposée à la direction de distribution réduisant la pression du gaz de travail (34), le moyen de commande (24) étant adaptés pour faire fonctionner l'entraînement de mouvement (20) pour pipeter un volume de dosage unique prédéterminé (36) inférieur à 5 µl de telle manière que le piston (14) est déplacé dans la direction de pipetage (P) tandis que sa face d'extrémité du côté dosage (14a) balaye un volume de pipetage, qui est au moins 1,4 fois plus grand que le volume de dosage unique (36), et **en ce que** le piston (14) est ensuite déplacé dans une direction de contre-pipetage (G) opposée à la direction de pipetage (P) où sa face d'extrémité du côté dosage (14a) balaye un volume de contre-pipetage, où, lorsque le pipetage est une aspiration, "direction de pipetage" désigne une direction de mouvement du piston qui provoque une aspiration du liquide de dosage dans un espace de pipetage du dispositif de pipetage, et lorsque le pipetage est une distribution, "direction de pipetage" désigne une direction de mouvement du piston, qui fait sortir du liquide de dosage de l'espace de pipetage du dispositif de pipetage, où il ne s'écoule pas plus de 50 ms entre le début du signal de commande du dispositif de commande (24) pour entraîner le piston (14) dans la direction de pipetage (P) et la fin du signal de commande pour entraîner le piston (14) dans la direction inverse (G).

2. Dispositif de pipetage selon la revendication 1,
**caractérisé en ce qu'il** ne s'écoulent pas plus de 50 ms entre le moment où le piston (14) dans la direction de pipetage (P) et dans la direction de contre-pipetage (G) atteint respectivement le site correspondant à la moitié de la distance entre la position initiale du piston et le site de retour du piston.

3. Dispositif de pipetage selon la revendication 1 ou 2,
**caractérisé en ce que** le volume de pipetage n'est pas inférieur à cinq fois, de préférence n'est pas inférieur à dix fois, de préférence n'est pas inférieur à trente fois, et n'est pas supérieur à 100 fois, de préférence n'est pas supérieur à soixante fois le volume de dosage unique (36).

4. Dispositif de pipetage selon l'une des revendications précédentes,
**caractérisé en ce que** le volume de contre-pipetage est égal au volume de pipetage ou inférieur au volume de pipetage par le volume de dosage unique (36).

5. Dispositif de pipetage selon l'une des revendications précédentes,
**caractérisé en ce que** le moyen de commande (24) est adapté, pour distribuer un volume de dosage unique prédéterminé (36) inférieur à 5 µl en mode jet dans lequel un volume de liquide distribué prédéterminé (36) a quitté un orifice de pipetage (30) du dispositif de pipetage (10), avant d'atteindre une surface d'une cible de dosage, pour actionner l'entraînement de mouvement (20) pour inverser la direction de mouvement du piston (14a) du sens de distribution au sens d'aspiration avant que le volume prédéterminé de liquide (36) se sépare de l'orifice de pipetage (30).

6. Dispositif de pipetage selon l'une des revendications précédentes,
**caractérisé en ce que** le moyen de commande (24) est adapté pour faire fonctionner l'entraînement de mouvement (20) pour l'aspiration d'un volume de dosage unique prédéterminé (36) inférieur à 5 µl de sorte que le piston (14) est déplacé dans la direction d'aspiration et, avant que le volume de dosage unique prédéterminé (36) soit complètement aspiré, pour entraîner l'entraînement de mouvement (20) afin qu'il inverse la direction du piston (14), de sorte que le piston (14) soit déplacé dans la direction de distribution.

7. Dispositif de pipetage selon l'une des revendications précédentes,
**caractérisé en ce que** le moyen de commande (24) et l'entraînement de mouvement (20) pour pipeter un volume de dosage unique prédéterminé (36) inférieur à 5 µl sont adaptés pour déplacer le piston (14) à une vitesse de pointe d'au moins 5000 µl/s, de préférence d'au moins 10000 µl/s et non supérieure à 25000 µl/s.

8. Dispositif de pipetage selon l'une des revendications précédentes,
**caractérisé en ce que** le dispositif de pipetage (10) est adapté pour recevoir de manière amovible des pointes de pipetage (26) ayant un volume nominal d'espace de pipetage qui est au moins dix fois, de préférence au moins vingt fois, de manière particulièrement préférée au moins cinquante fois, et de manière la plus préférée au moins cent fois le volume de dosage unique (36).

9. Dispositif de pipetage selon l'une des revendications précédentes,
**caractérisé en ce que** le dispositif de pipetage (10) est adapté pour l'aliquote.

10. Dispositif de pipetage selon la revendication 9,
**caractérisé en ce que** le dispositif de pipetage (10), en fonctionnement par aliquote, est adapté pour effectuer une pluralité d'opérations de distribution dans lesquelles le volume de pipetage et le volume de contre-pipetage sont respectivement de taille égale.

11. Dispositif de pipetage selon la revendication 9 ou 10,
**caractérisé en ce que** le dispositif de pipetage (10), en fonctionnement par aliquote, est adapté pour effectuer une pluralité d'opérations de distribution dans lesquelles le volume de contre-pipetage est inférieur au volume de pipetage par le volume de dosage unique (36).

12. Dispositif de pipetage selon l'une des revendications précédentes,
**caractérisé en ce que** la course du piston est variable dans la direction de pipetage (P) ou/et la course du piston est variable dans la direction de contre-pipetage (G) ou/et la vitesse du piston et/ou l'accélération du piston sont variables.

13. Dispositif de pipetage selon l'une des revendications précédentes,
**caractérisé en ce que** le moyen de commande (24) est adapté pour déplacer le piston (14) pour pipeter un volume de dosage unique prédéterminé (36) de plus de 5 µl avec une vitesse de pointe non supérieure à 1000 µl/s.

14. Dispositif de pipetage selon l'une des revendications précédentes,
**caractérisé en ce qu'**il est adapté pour pipeter un volume de dosage unique (36) sélectionnable de manière reproductible dans une plage de volume de dosage de 100 ni à 100 µl, de préférence de 100 ni à 1000 µl, avec un écart de volume non supérieur à 2% par rapport au volume nominal.

15. Dispositif de pipetage selon l'une des revendications précédentes,
**caractérisé en ce que** l'entraînement de mouvement (20) comprend un moteur linéaire (20).

16. Dispositif de pipetage selon la revendication 15,
**caractérisé en ce que** le piston (14) est le rotor du moteur linéaire (20) de sorte que le champ électromagnétique du stator du moteur linéaire (22) interagit directement avec le piston (14) pour l'accélérer et le ralentir.

17. Dispositif de pipetage selon la revendication 16,
**caractérisé en ce que** le piston (14) comprend une pluralité d'aimants permanents (18) disposés le long du trajet de canal (K) successivement avec une direction de polarisation le long du trajet de canal (K) et avec des pôles du même signe directement opposés les uns aux autres le long du trajet de canal (K).

18. Dispositif de pipetage selon l'une des revendications précédentes,
**caractérisé en ce qu'**il comprend une pluralité de canaux de pipetage parallèles (12), la distance d'un canal de pipetage (12) à un canal de pipetage parallèle le plus proche (12) ne dépassant pas 12 mm.

19. Procédé de pipetage pour pipeter, c'est-à-dire aspirer et distribuer, un volume de dosage unique prédéterminé (36) d'un liquide de dosage (32), comprenant les étapes suivantes :
- prévoir une quantité de gaz de travail et un espace de pipetage (28) au moins partiellement rempli du gaz de travail (34), qui est accessible par une ouverture de pipetage (30),
- prévoir un piston (14) mobile le long d'un trajet de canal (K) dans la direction de pipetage (P) et dans la direction de contre-pipetage (G), dont au moins la face d'extrémité du côté dosage (14a) tournée vers le liquide de dosage, est adaptée sous forme de corps solide,
- déplacer le piston (14) le long du trajet de canal (K) et modifier ainsi la pression du gaz de travail (14) avec la face d'extrémité du côté dosage (14a) du piston (14) tournée vers l'ouverture de pipetage (30) et pipeter ainsi le liquide de dosage (32),
**caractérisé en ce que** le mouvement du piston (14) le long du trajet de canal (K) pour pipeter un volume de dosage unique (36) inférieur à 5 µl comporte les sous-étapes suivantes :
- déplacer le piston (14) à partir d'une position de départ dans la direction de pipetage (P) et ainsi balayer un volume de pipetage avec la face d'extrémité du côté dosage (14a) qui est au moins 1,4 fois plus grand que le volume de dosage simple (36) et ensuite
- déplacer le piston (14) dans la direction de contre-pipetage (G), où, lorsque le pipetage est une aspiration, "direction de pipetage" désigne une direction de mouvement du piston qui provoque une aspiration du liquide de dosage dans un espace de pipetage du dispositif de pipetage, et dans laquelle, lorsque le pipetage est une distribution, "direction de pipetage" désigne une direction de mouvement du piston qui fait sortir le liquide de distribution de l'espace de pipetage du dispositif de pipetage,
où il ne s'écoulent pas plus de 50 ms entre les moments où le piston (14) atteint dans la direction de pipetage (P) et dans la direction contre-pipetage (G) respectivement le site correspondant à la moitié de la distance entre la position initiale du piston et le site de retour du piston.

20. Procédé de pipetage selon la revendication 19,
**caractérisé en ce que** pendant la distribution, la direction du piston (14) est inversée de la direction de distribution à la direction d'aspiration avant que le volume de dosage unique prédéterminé (36) soit complètement séparé de l'ouverture de pipetage (30).

21. Procédé de pipetage selon l'une quelconque des revendications 19 ou 20,
**caractérisé en ce que** pendant l'aspiration, la direction du piston (14) est inversée de la direction d'aspiration à la direction de distribution avant que le volume de dosage unique prédéterminé (36) ait complètement traversé l'orifice de pipetage (30).

22. Procédé de pipetage selon l'une quelconque des revendications 19 à 21,
**caractérisé en ce que** le piston (14) est déplacé dans la direction de pipetage (P) et/ou dans la direction de contre-pipetage (G) à une vitesse de pointe d'au moins 5000 µl/s, de préférence d'au moins 10000 µl/s et de pas plus de 25000 µl/s.
